# EUROPEAN PATENT APPLICATION

(11) **EP 4 752 668 A1**
(43) Date of publication of application: **03.06.2026**
(21) Application number: 25218824.8
(22) Date of filing: 26.11.2025
(51) Int. Cl.: G05D 1/644, G05D 1/633, G05D 1/672, G05D 1/242, A01B 69/04, G05D 105/15, G05D 107/20, G05D 109/10, G05D 111/10

(54) **AUTOMATIC TRAVEL ASSISTANCE SYSTEM**

(30) Priority: 29.11.2024 JP 2024208501
(71) Applicant: KUBOTA CORPORATION, Osaka-shi, Osaka 556-8601 (JP)
(72) Inventor: MATSUMOTO, Shogo, Sakai-Shi, Osaka 5900908 (JP); TAKAKI, Shumpei, Sakai-Shi, Osaka 5900908 (JP); KITAJIMA, Toshihiro, Sakai-Shi, Osaka 5900908 (JP)
(74) Representative: Cabinet Beau de Loménie

(57) **Abstract**

An automatic travel assistance system (100) includes an input interface (13a to 13d, 32) to receive input of vehicle information relating to a working vehicle (1), goal information relating to a goal point in a predetermined area, and area information relating to at least one obstacle in the area, the working vehicle (1) including a traveling device (5) to cause a vehicle body (3) to travel and having attached thereto a working device (2) to perform work, an information processor (11) configured or programmed to create a costmap of the area showing a cost distribution by assigning a cost of a first predetermined value to a location where the at least one obstacle is present and assigning costs each of which is less than the first predetermined value to locations where no obstacles are present such that the costs decrease with increasing distance from the at least one obstacle, each of the cost and the costs being a degree of difficulty for the vehicle body, the traveling device, and the working device to pass through the corresponding location, and a vehicle controller (12) configured or programmed to control travel of the working vehicle such that the vehicle body, the traveling device, and the working device pass through locations at each of which the corresponding assigned cost is equal to or less than a second predetermined value less than the first predetermined value, to cause the working vehicle to perform automatic travel toward the goal point.

## Description

### BACKGROUND OF THE INVENTION

### Field of the Invention

The present invention relates to automatic travel assistance systems to assist working vehicles to automatically travel while avoiding working vehicles from hitting obstacles.

### Description of the Related Art

As a system to assist automatic travel (autonomous travel) of a working vehicle, for example, a system disclosed in Japanese Patent No. 7405072 is known. The system disclosed in Japanese Patent No. 7405072 is a movement control system that controls movement of a moving body (vehicle) to a destination, and includes an acquisition unit that acquires training data including track data relating to a track along which the moving body has actually moved and movement situation information relating to a situation when the moving body has moved along the track, a calculation unit that calculates a cost function such that the track along which the moving body has actually moved has the least cost by inverse reinforcement learning based on the training data, and a track calculation unit that generates a costmap showing the distribution of safety margins or the like relating to the distance from an obstacle by inputting at least one of the location, speed, or peripheral information of the moving body to the cost function and calculates a track with the least cost based on the costmap.

### SUMMARY OF THE INVENTION

Unlike a typical vehicle (in other words, automobile) as exemplified in Japanese Patent No. 7405072, a working device (implement or the like) that performs work is attached to a working vehicle. The working device includes various types and sizes of working devices, and protrudes outward, such as in the vehicle-width direction and rearward, from the vehicle body of the working vehicle. Thus, when the working vehicle travels, the working device may contact or hit an obstacle present in the surrounding area, and the travel performance may be impaired. However, the working device is not considered in the creation of the costmap in related art.

Example embodiments of the present invention make it possible to cause working vehicles each with a working device attached to perform automatic travel stably.

An automatic travel assistance system according to an example embodiment of the present invention includes an input interface to receive input of vehicle information relating to a working vehicle, goal information relating to a goal point in a predetermined area, and area information relating to at least one obstacle in the area, the working vehicle including a traveling device to cause a vehicle body to travel and being configured to attach thereto a working device to perform work, an information processor configured or programmed to create a costmap of the area showing a cost distribution by assigning a cost of a first predetermined value to a location where the at least one obstacle is present and assigning costs each of which is less than the first predetermined value to locations where no obstacles are present such that the costs decrease with increasing distance from the at least one obstacle, each of the cost and the costs being a degree of difficulty for the vehicle body, the traveling device, and the working device attached to the working vehicle to pass through the corresponding location, and a vehicle controller configured or programmed to control travel of the working vehicle such that the vehicle body, the traveling device, and the working device pass through locations at each of which the corresponding assigned cost is equal to or less than a second predetermined value less than the first predetermined value, to cause the working vehicle to perform automatic travel toward the goal point.

With example embodiments of the present invention, it is possible to cause the working vehicle with the working device attached to perform the automatic travel stably.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a schematic configuration diagram of an example of an automatic travel assistance system.
FIG. 2 is a side view of an example of a working vehicle.
FIG. 3 is a block diagram illustrating an example of an electrical configuration of the working vehicle.
FIG. 4A is a diagram illustrating an example of a first costmap.
FIG. 4B is a diagram illustrating an example of the first costmap and a travel route.
FIG. 5A is a diagram illustrating an example of a second costmap.
FIG. 5B is a diagram illustrating an example of the second costmap and a travel route.
FIG. 6 is a front view of an example of a working vehicle and an object in the surrounding area.
FIG. 7 is a diagram illustrating an example of the distributions of costs around a stationary obstacle and a moving obstacle.
FIG. 8 is a diagram illustrating an example of the distributions of costs around the moving obstacle.
FIG. 9A is a flowchart presenting an example of an operation of the automatic travel assistance system.
FIG. 9B is a flowchart presenting the example of the operation of the automatic travel assistance system.
FIG. 10 is a flowchart presenting an example of an image generation process for weeds and an unpaved road.
FIG. 11 is a flowchart presenting an example of an image generation process for an agricultural field.
FIG. 12 is a simple image of an example of a camera image.
FIG. 13A is an image showing an example of generating an annotation image.
FIG. 13B is an image showing an example of generating the annotation image.
FIG. 13C is an image showing an example of generating the annotation image.
FIG. 13D is an image showing an example of generating the annotation image.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings. Note that, for convenience, the same reference signs are given to the same configurations and corresponding configurations.

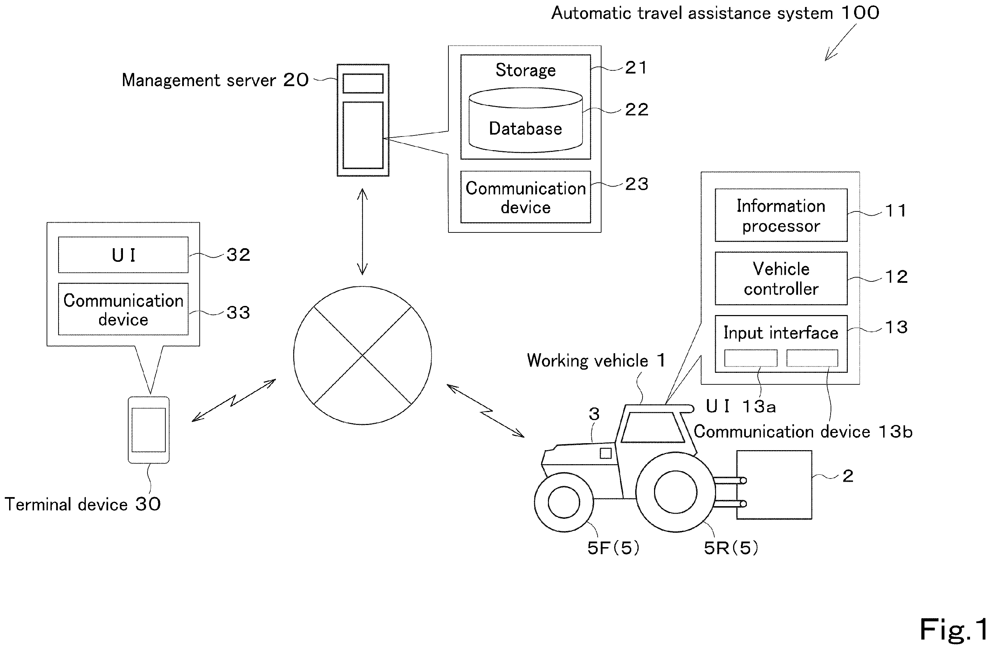

FIG. 1 is a schematic configuration diagram of an example of an automatic travel assistance system 100. The automatic travel assistance system 100 is a system that assists automatic travel (autonomous travel) of a working vehicle 1. The automatic travel assistance system 100 includes the working vehicle 1, a management server 20, and a terminal device 30. Although FIG. 1 illustrates one working vehicle 1, one management server 20, and one terminal device 30, the number of working vehicles 1, the number of management servers 20, and the number of terminal devices 30 included in the automatic travel assistance system 100 may each be one or two or more.

The working vehicle 1 is an agricultural machine (also referred to as an autonomous travel agricultural machine) or the like capable of autonomously traveling and performing work. In the present example embodiment, the working vehicle 1 is a tractor, which is an example of an agricultural machine that performs agricultural work in an agricultural field. The working vehicle 1 may be an agricultural machine other than a tractor, a construction machine, or a working machine that performs work while traveling in a place other than an agricultural field.

The working vehicle 1 includes an information processor (computer) 11, a vehicle controller 12, and an input interface 13. The vehicle controller 12 is an electronic control unit (ECU) including a processor and a memory. The vehicle controller 12 is a controller that controls the operation of each component of the working vehicle 1. The input interface 13 is used to input information to the working vehicle 1 and the automatic travel assistance system 100. The input interface 13 includes a user interface 13a and a communication device (communication interface) 13b. Various types of information can be inputted and outputted via the user interface 13a. The communication device 13b includes a communication circuit for wireless communication.

The management server 20 is a server or a computer provided in a management center or a cloud system. The management server 20 includes a processor, a memory, a storage (storage device) 21 having a larger capacity than the memory, and a communication device 23. A database 22 is built in the storage 21. The database 22 stores various types of information. The management server 20 can communicate with the information processor 11, the vehicle controller 12, and the terminal device 30 via a wide-area network including, for example, a mobile phone communication network and the Internet by the communication device 23. The management server 20 is an input interface that can input information to the working vehicle 1.

The terminal device 30 is a computer used by an administrator or another user of the automatic travel assistance system 100. The terminal device 30 includes a processor, a memory, a user interface 32, and a communication device 33. Various types of information can be inputted and outputted via the user interface 32. The terminal device 30 can communicate with the management server 20, the information processor 11, and the vehicle controller 12 via the wide-area network by the communication device 33. The terminal device 30 is an input interface that can input information to the management server 20, the working vehicle 1, and the automatic travel assistance system 100.

The information processor 11 and the vehicle controller 12 of the working vehicle 1 can communicate with the management server 20 and the terminal device 30 via the wide-area network by the communication device 13b. As another example, the information processor 11 and the vehicle controller 12 may communicate with the management server 20 and the terminal device 30 via a narrow-area network such as a wireless LAN by the communication device 13b.

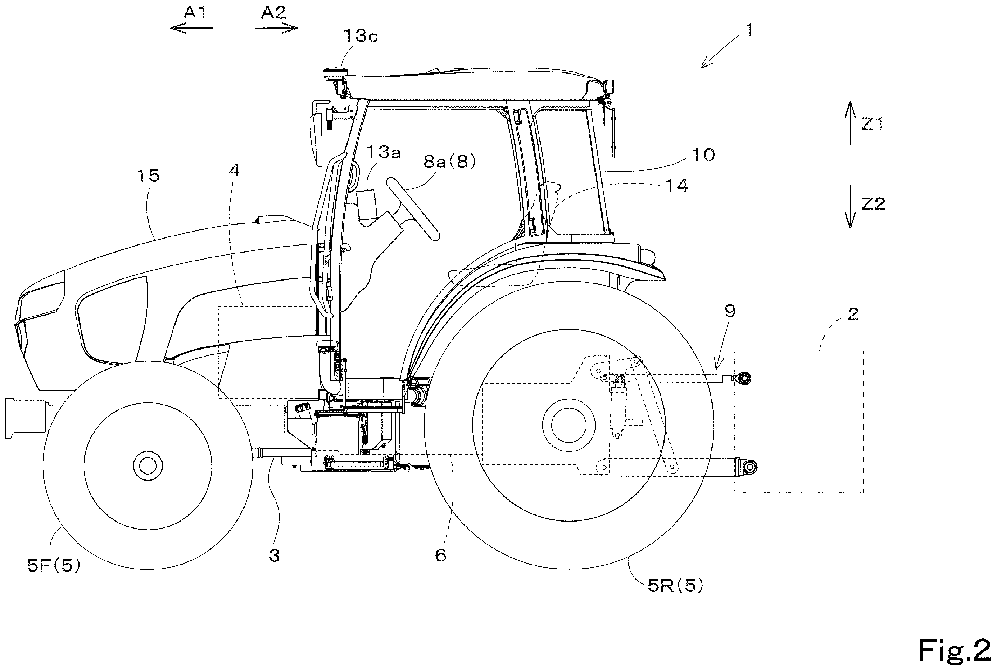

FIG. 2 is a side view of an example of the working vehicle 1. The direction indicated by arrow A1 in FIG. 2 is the forward direction of the working vehicle 1. The direction indicated by arrow A2 is the rearward direction of the working vehicle 1. The direction indicated by arrow Z1 is the upward direction of the working vehicle 1. The direction indicated by arrow Z2 is the downward direction of the working vehicle 1. Then, the direction perpendicular to arrows A1, A2, Z1, and Z2 is the width direction (left-right direction) of the working vehicle 1. The near side in FIG. 2 is the leftward direction of the working vehicle 1, and the far side is the rightward direction of the working vehicle 1.

The working vehicle 1 includes a vehicle body 3, a prime mover 4, at least one traveling device 5, a transmission 6, a brake 7, and a steering device 8. The at least one traveling device 5 includes a traveling device 5 provided on a left portion and a traveling device 5 provided on a right portion of the vehicle body 3. The traveling devices 5 each are a track assembly that supports the vehicle body 3 and causes the vehicle body 3 to travel. In the present example embodiment, the traveling device 5 is a wheeled traveling device including a front wheel 5F and a rear wheel 5R. Alternatively, the traveling device 5 may be a crawler-track traveling device, or may be a composite traveling device including a wheel and a crawler track.

The prime mover 4, the transmission 6, and the steering device 8 are mounted on the vehicle body 3. The prime mover 4 is an engine (diesel engine, gasoline engine), an electric motor, or the like. The transmission 6 is a hydro static transmission (HST) or a hydro mechanical transmission (HMT). The transmission 6 performs a speed-change operation to vary the propelling force of the traveling device 5 and switch the travel of the traveling device 5 between forward travel and backward travel. The brake 7 brakes the traveling device 5. The steering device 8 changes the orientation of the front wheels 5F to steer the vehicle body 3.

A cabin 10 is mounted on an upper portion of the vehicle body 3. The cabin 10 is provided with an operator's seat (driver's seat) 14 and a steering handle 8a. The steering handle 8a is included in the steering device 8. Additionally, the cabin 10 is provided with manual operators such as levers, pedals, and switches to operate the working vehicle 1. The working vehicle 1 is a tractor that can automatically travel and perform work without an operator, but the working vehicle 1 can also be manually operated by a worker seated on the operator's seat 14 operating the manual operators.

A hood 15 is provided forward of the cabin 10. The hood 15 is attached to the vehicle body 3. An accommodation room (reference sign omitted) is provided between the hood 15 and the vehicle body 3. The accommodation room accommodates not only the prime mover 4 but also a cooling fan, a radiator, a battery, and the like (not illustrated).

A linkage 9 is provided at a rear portion of the vehicle body 3. The linkage 9 includes, for example, a three-point linkage, but may include a drawbar other than the three-point linkage. A working device 2 that performs work is attachable/detachable to/from the linkage 9. That is, the working device 2 is attached (provided) rearward of the vehicle body 3. By connecting the working device 2 to the linkage 9 and driving the traveling device 5, the working vehicle 1 (vehicle body 3) can be caused to travel and the working device 2 can be moved. Additionally, the working device 2 can be raised/lowered, and the posture (the position and the orientation in the up-down direction) of the working device 2 can be changed by the linkage 9.

The working device 2 is an implement such as a cultivator for cultivation, a fertilizer spreader for spreading a fertilizer, an agricultural chemical spreader for spreading an agricultural chemical, a harvester for harvesting, a mower for cutting grass or the like, a tedder for spreading grass or the like, a rake for collecting grass or the like, or a baler for shaping grass or the like.

Examples of the working device 2 that can be used by the working vehicle 1 include a working device 2 having a width larger than the vehicle width of the working vehicle 1 (vehicle body 3), a towed working device 2 including wheels, and a mounted working device 2 supported by the working vehicle 1 via the linkage 9. Examples of the mounted working device 2 include a working device 2 that performs work while in contact with the ground surface and a working device 2 that performs work while not in contact with the ground surface. In the case where the working device 2 that performs work while in contact with the ground surface is connected to the linkage 9, the working device 2 is lowered by the linkage 9 and brought into a position in contact with the ground surface when performing work, and the working device 2 is raised by the linkage 9 and brought into a position not in contact with the ground surface (a position at a certain height from the ground surface) when, for example, the working vehicle 1 travels without performing work.

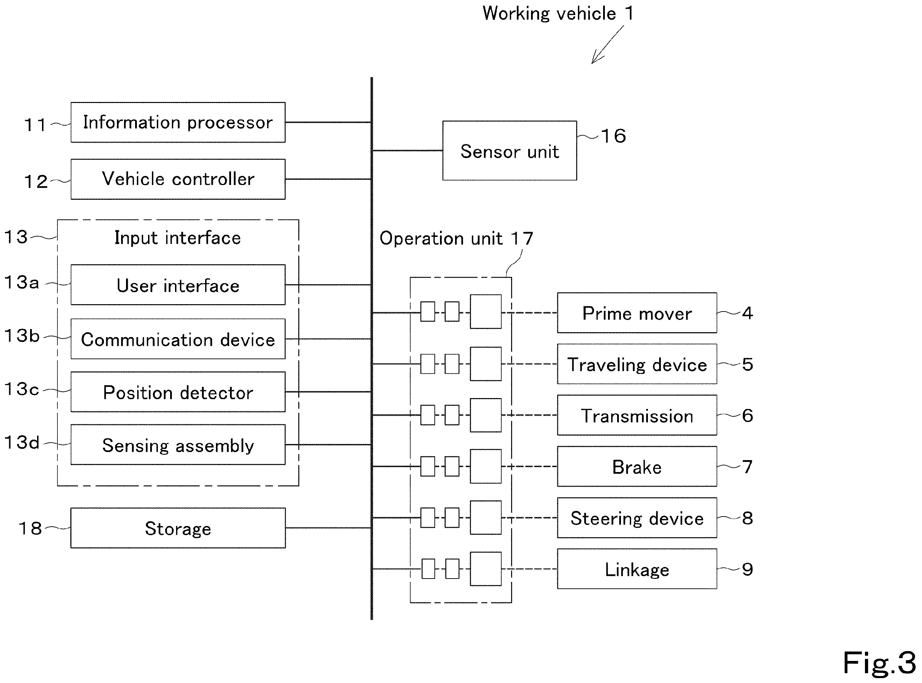

FIG. 3 is a block diagram illustrating an example of an electrical configuration of the working vehicle 1. In addition to the above-described configuration, the working vehicle 1 includes a position detector 13c, a sensing assembly 13d, a sensor unit 16, an operation unit 17, and a storage 18. The position detector 13c and the sensing assembly 13d are included in the input interface 13 together with the user interface 13a and the communication device 13b.

The information processor 11, the vehicle controller 12, the input interface 13, the sensor unit 16, and the storage 18 are electrically connected via an in-vehicle network such as CAN, LIN, or FlexRay built in the working vehicle 1. The operation unit 17 is connected to the vehicle controller 12.

The internal memories of the information processor 11 and the vehicle controller 12 include a volatile memory and a nonvolatile memory. The storage 18 is, for example, a memory drive such as a solid state drive (SSD). The internal memories and the storage 18 store various types of information, data, and software program(s) to cause the working vehicle 1 to perform automatic travel. Additionally, the information processor 11 and the vehicle controller 12 cause information to be stored in the internal memories or the storage 18 as appropriate.

The user interface 13a is, for example, a touch panel or a tablet terminal device (computer) including a display. The user interface 13a is installed in the vicinity of the operator's seat 14 in the cabin 10 (FIG. 2). The information processor 11 and the vehicle controller 12 output (display) various types of information relating to the working vehicle 1 stored in the internal memories via the user interface 13a. Additionally, the driver or the like of the working vehicle 1 inputs various types of information via the user interface 13a. The user interface 13a is an input interface and an output interface.

The communication device 13b includes not only a communication circuit for wireless communication with the management server 20 and the terminal device 30 but also an interface for communication with the information processor 11 and the vehicle controller 12 via the in-vehicle network of the working vehicle 1. The communication device 13b is an input interface and an output interface.

The position detector 13c is a position measuring device including a GNSS receiver, and is installed on the upper portion of the cabin 10 as illustrated in FIG. 2. The position detector 13c detects the position thereof (measured position information including latitude and longitude) using a satellite positioning system. Specifically, the position detector 13c receives signals (positions of positioning satellites, transmission times, correction information, and the like) transmitted from the positioning satellites, and detects the position thereof based on the signals. The position detector 13c may detect a position corrected based on a signal of correction or the like from a base station (reference station) capable of receiving signals from the positioning satellites, as the position thereof.

Additionally, the position detector 13c may include inertial measurement units (inertial sensors) such as a gyroscope sensor and an acceleration sensor. In this case, the position detector 13c may correct the position (latitude, longitude) detected based on the signals received from the positioning satellites by the inertial measurement units, and detect the corrected position as the position thereof.

The information processor 11 and the vehicle controller 12 regard the position detected by the position detector 13c as the position of the vehicle body 3 of the working vehicle 1. That is, the position detector 13c detects the position of the vehicle body 3 (working vehicle 1). Additionally, the information processor 11 and the vehicle controller 12 calculate the positions of the vehicle body 3, the traveling device 5, and the working device 2 based on the position detected by the position detector 13c and information (outer shape information) indicating the sizes of the vehicle body 3, the traveling device 5, and the working device 2 of the working vehicle 1 stored in advance.

The sensing assembly 13d includes a laser sensor, an ultrasonic sensor, and a camera (imager). The laser sensor, the ultrasonic sensor, and the camera are installed at appropriate portions such as a front portion, a rear portion, left and right side portions, an upper portion, and a lower portion of the working vehicle 1, and detect the state of the surrounding area of the working vehicle 1 and the working device 2. Note that at least one of the laser sensor, the ultrasonic sensor, or the camera may be included in the sensing assembly 13d. Additionally, a detector such as a sensor other than these may be included in the sensing assembly 13d.

The sensing assembly 13d performs sensing in the surrounding area of the working vehicle 1 by the laser sensor, the ultrasonic sensor, and the camera. Specifically, the sensing assembly 13d performs sensing in a range at a predetermined first distance from the working vehicle and detects an object including an obstacle and matter other than the obstacle in the range. Additionally, the sensing assembly 13d calculates the distance from the object based on the detection results of the laser sensor and the ultrasonic sensor. Note that the obstacle is tangible or intangible matter that obstructs travel of the working vehicle 1. The object and the obstacle include a predetermined natural object, an artificial object, a groove, a dent, a person, an animal, and the like that occupy a space. For example, the object includes a ground surface and a path regardless of whether being paved. The obstacle includes places such as a ground surface and an agricultural field where the working vehicle 1 is prohibited from traveling. The obstacle does not include places such as a ground surface and an agricultural field where the working vehicle 1 is permitted to travel.

The sensor unit 16 includes various sensors installed in components of the working vehicle 1 and the working device 2. The information processor 11 and the vehicle controller 12 determine the operating states of the working vehicle 1 and the working device 2 based on the output signals from the various sensors of the sensor unit 16. The operating state of the working vehicle 1 determined by the information processor 11 and the vehicle controller 12 includes the driving and stopping states of the components of the working vehicle 1, the travel direction, the travel speed, the acceleration, the posture (pitch angle, roll angle, yaw angle (orientation, azimuth)), and the like of the working vehicle 1 (vehicle body 3), and the operating state of the working device 2 includes the driving and stopping states, the postures (at least the positions in the up-down direction), and the like of the components of the working device 2.

As another example, the information processor 11 and the vehicle controller 12 may detect the position of the vehicle body 3 at a predetermined cycle by the position detector 13c, and detect (calculate) the travel direction, the travel speed, the acceleration, and the posture of the working vehicle 1 (vehicle body 3) based on the time-series data of the position of the vehicle body 3. Alternatively, the information processor 11 and the vehicle controller 12 may detect the travel direction, the travel speed, the acceleration, and the posture of the working vehicle 1 from the measurement results of the inertial measurement units included in the position detector 13c. Alternatively, a rotation speed sensor that detects the rotation speed of the wheels 5F and 5R of the traveling device 5 or the rotation speed and the rotation direction of the traveling motor that rotates the wheels 5F and 5R may be provided, and the information processor 11 and the vehicle controller 12 may detect the travel direction, the travel speed, and the acceleration of the working vehicle 1 based on the output signal from the rotation speed sensor.

The operation unit 17 includes a plurality of manual operators, a plurality of drive circuits, and a plurality of actuators to actuate the prime mover 4, the traveling device 5, the transmission 6, the brake 7, the steering device 8, and the linkage 9. The plurality of manual operators include a plurality of operation members operated by the driver of the working vehicle 1, and a plurality of sensors that detect at least one of whether operations are made, the operation directions, or the operation amounts of the plurality of operation members.

The plurality of actuators of the operation unit 17 are hydraulic actuators such as hydraulic motors and hydraulic cylinders. In order to actuate the plurality of hydraulic actuators, the operation unit 17 includes a hydraulic circuit (drive circuit), and the hydraulic circuit includes a hydraulic pump, a hydraulic motor, a hydraulic pilot operating valve, and an electromagnetic control valve.

As another example, at least one of the plurality of actuators of the operation unit 17 may be an electric actuator such as a servo motor and a servo cylinder. Then, in order to actuate the electric actuator, the operation unit 17 includes an electric circuit (drive circuit), and the electric circuit may include a semiconductor element.

The vehicle controller 12 actuates each of the plurality of actuators included in the operation unit 17 to drive or actuate the corresponding prime mover 4, traveling device 5, transmission 6, brake 7, steering device 8, and linkage 9. Additionally, the vehicle controller 12 controls the actuations of the prime mover 4, the traveling device 5, the transmission 6, the brake 7, and the steering device 8 by the operation unit 17 to cause the working vehicle 1 to travel and control the travel (travel speed and steering). That is, the vehicle controller 12 controls the actuations of the prime mover 4, the traveling device 5, the transmission 6, the brake 7, and the steering device 8 by the operation unit 17 to perform automatic travel in which the start and stop of travel, the change of the travel speed, and the steering of the working vehicle 1 are automatically controlled. Additionally, the vehicle controller 12 also actuates the linkage 9 by the corresponding actuator to raise/lower the working device 2 connected to the linkage 9.

The storage 18 of the working vehicle 1 stores vehicle information relating to the working vehicle 1. The vehicle information includes identification information of the working vehicle 1 and information relating to the vehicle body 3, the traveling device 5, and the working device 2. Specifically, the identification information of the working vehicle 1 is, for example, the model number of the working vehicle 1. The information relating to the vehicle body 3 and the traveling device 5 includes pieces of information indicating the size (outer shape) of the vehicle body 3, the type and size of the traveling device 5, the position of the traveling device 5 relative to the vehicle body 3, and the heights (positions in the up-down direction) of the vehicle body 3 and the traveling device 5 from the bottom of the traveling device 5.

The type of the traveling device 5 includes a wheeled traveling device in which the ground contact portion is a wheel, a crawler-track traveling device in which the ground contact portion is a crawler track, and a composite traveling device in which the ground contact portion is a wheel and a crawler track. When the type of the traveling device 5 is the wheeled or composite traveling device, the information indicating the size of the traveling device 5 includes the width and diameter of the wheels and the tread width of the pair of left and right wheels. When the type of the traveling device 5 is the crawler-track or composite traveling device, the information indicating the size of the traveling device 5 includes the sizes of the crawler track in three orthogonal-axis directions (the front-rear direction, the left-right direction, and the up-down direction of the vehicle body 3) and the distance between the pair of left and right crawler tracks.

The information relating to the working device 2 included in the vehicle information includes pieces of device information respectively set for a plurality of working devices 2 that can be used in the working vehicle 1. Each of the pieces of device information includes pieces of information indicating the type and size (outer shape) of the working device 2, the position of the working device 2 relative to the vehicle body 3, and the height of the working device 2 from the bottom of the traveling device 5.

For example, the operator may directly input vehicle information via the user interface 13a. Alternatively, the operator may input vehicle information via the user interface 32 of the terminal device 30, and then input the vehicle information from the terminal device 30 to the in-vehicle network of the working vehicle 1 in a wireless or wired manner, or via a storage medium. Then, the information processor 11 may cause the vehicle information inputted in this manner to be stored in the storage 18. Additionally, the information processor 11 may transmit the inputted vehicle information to the management server 20 by the communication device 13b, and the management server 20 may receive the vehicle information and store the vehicle information in the database 22.

Alternatively, the terminal device 30 may transmit vehicle information to the management server 20 by the communication device 33 via the user interface 32, and the management server 20 may receive the vehicle information by the communication device 23 and store the vehicle information in the database 22. Then, the information processor 11 may communicate with the management server 20 by the communication device 23, receive (acquire) the vehicle information corresponding to the working vehicle 1 by the communication device 23, and cause the vehicle information to be stored in the storage 18.

Additionally, after any one of the working devices 2 is connected to the linkage 9 of the working vehicle 1, when the operator inputs information indicating the connected working device 2 via the user interface 13a, the information processor 11 may select device information corresponding to the information from the vehicle information stored in the storage 18.

Alternatively, in a case where an electronic control unit including a CPU and a memory is mounted on the working device 2, when the electronic device is connected to the in-vehicle network of the working vehicle 1 in a wireless or wired manner and identification information of the working device 2 is inputted from the electronic device to the in-vehicle network, the information processor 11 may select device information corresponding to the identification information from the vehicle information stored in the storage 18. Alternatively, device information of the working device 2 may be inputted from the electronic device to the in-vehicle network, and the information processor 11 may select the device information and cause the device information to be stored in the storage 18.

The storage 18 of the working vehicle 1 also stores one or more pieces of area information relating to one or more predetermined areas (regions) where the working vehicle 1 travels. The area information includes map information of the predetermined area, and the map information includes information relating to a path, an obstacle, and the like (and other matter) in the predetermined area. The information relating to the path includes pieces of information indicating the position (coordinates), the size (length, width), and the gradient of each of paths such as a paved road and an unpaved farm road in the predetermined area. The information relating to the obstacle includes pieces of information indicating the type, the size, and the position (coordinates) of the obstacle, and the height of the obstacle from the ground surface in the predetermined area.

For example, the area information may be generated by the terminal device 30, stored in the database 22 of the management server 20, acquired by the communication device 13b, and stored in the storage 18 by the information processor 11.

For example, map information of a plurality of areas is stored in the database 22 of the management server 20. When the operator inputs information indicating a desired area via the user interface 32 of the terminal device 30 to designate the area, the terminal device 30 communicates with the management server 20 by the communication device 33, acquires (receives) map information corresponding to the information from the database 22 via the management server 20 or the like, and outputs the acquired map information via the user interface 32. Thus, the map of the desired area is displayed on the display of the user interface 32, and objects representing existing paths, obstacles, and the like are indicated on the map.

When an object representing a new path or obstacle that the operator knows is not indicated on the map of the area displayed on the user interface 32, the operator inputs information relating to the new path or obstacle via the user interface 32. The terminal device 30 causes an object representing the new path or obstacle to be indicated on the map of the area displayed on the user interface 32 based on the inputted information.

Additionally, the operator may set (input) a goal point toward which the working vehicle 1 travels on the displayed map of the area via the user interface 32. In this case, the terminal device 30 causes an object representing the set goal point to be indicated on the map of the area via the user interface 32.

Then, when the operator performs a predetermined confirmation operation via the user interface 32, the terminal device 30 adds information relating to the new path, information relating to the obstacle, and information relating to the goal point, which are inputted as described above, to map information of the area, generates area information including the map information, and transmits the area information to the management server 20 by the communication device 33. The management server 20 stores the area information received from the terminal device 30 in the database 22. Then, the area information may be updated by the terminal device 30 in the same procedure as described above, and the updated area information may be stored in the database 22. Note that the information relating to the goal point includes information indicating the position (coordinates) of the goal point set in the predetermined area.

In the working vehicle 1, when the operator inputs information indicating a desired area via the user interface 13a to designate the area, the information processor 11 communicates with the management server 20 via the communication device 13b, acquires (receives) area information corresponding to the desired area from the management server 20, and causes the acquired area information to be stored in the storage 18.

Alternatively, area information may be inputted to the in-vehicle network of the working vehicle 1 from the terminal device 30 in a wireless or wired manner, or via a storage medium but not via the management server 20, and the information processor 11 may cause the area information to be stored in the storage 18. Alternatively, the operator may acquire map information of a desired area from the database 22 via the user interface 13a, the information processor 11, the communication device 13b, and the like of the working vehicle 1, generate area information, and cause the area information to be stored in the storage 18 and the database 22. Additionally, the operator may input goal information relating to a goal point among pieces of information included in area information via the user interface 13a of the working vehicle 1.

Additionally, area information may include identification information of a device in which the area information is generated, identification information of a device in which the area information is updated, and time information such as a time stamp indicating the date and time when the area information is generated and the date and time when the area information is updated.

Additionally, area information may include information indicating a planned route for the working vehicle 1 to travel toward a goal point. For example, the information processor 11 may plan a planned route based on area information and add information indicating the planned route to the area information. Alternatively, the terminal device 30 may plan a planned route based on area information and add information indicating the planned route to the area information, or the information processor 11 may receive information indicating a planned route planned by the terminal device 30 and add the information to area information stored in the storage 18. Alternatively, the operator may plan a planned route and input information indicating the planned route via any one of the user interface 32 of the terminal device 30 and the user interface 13a of the working vehicle 1, and any one of the terminal device 30 and the information processor 11 may add the information indicating the planned route to the area information.

In the case of planning a planned route, for example, a vehicle model in which the working vehicle 1 and the working device 2 attached to the working vehicle 1 are viewed in plan is located on the map of an area, and a planned route is created such that the vehicle model travels toward a goal point while avoiding the vehicle model from hitting an obstacle under a predetermined condition. The predetermined condition includes reducing at least one of the period of time or the distance to reach the goal point as quickly as possible. Additionally, for example, the predetermined condition may include travel in a place where the working vehicle 1 is permitted to travel. Note that the place where the working vehicle 1 is permitted to travel is a place set in advance, and includes not only a path indicated by the map information of the area but also a land other than the path.

The start point of a planned route may be the current position of the working vehicle 1 (vehicle body 3) detected by the position detector 13c, or may be a home position set in advance such as the garage of the working vehicle 1. The end point of the planned route is a goal point, and the goal point is, for example, an agricultural field where work is performed by the working vehicle 1. In the present example embodiment, a predetermined area is an area including an agricultural field and a place other than the agricultural field. Additionally, a planned route is a route for the working vehicle 1 to travel in a place other than an agricultural field of the area toward the goal point without work performed by the working device 2. The same applies to another path described later.

When the operator inputs information indicating a desired area via the user interface 13a to designate the area, the information processor 11 and the vehicle controller 12 read area information and vehicle information corresponding to the inputted information from the storage 18, and the information processor 11 displays a map of the area indicating a goal point, a planned route to the goal point, and the like via the user interface 13a based on the area information.

When the operator looks at the map of the area and performs a predetermined travel start operation for causing the working vehicle 1 to perform automatic travel toward the goal point via at least one of the user interface 13a or a manual operator of the operation unit 17, the vehicle controller 12 starts the automatic travel of the working vehicle 1 based on the planned route.

Specifically, the vehicle controller 12 controls the actuations of the prime mover 4, the traveling device 5, the transmission 6, the brake 7, and the steering device 8 by the operation unit 17 based on the planned route and the vehicle body 3 (working vehicle 1) detected by the position detector 13c to cause the working vehicle 1 to travel, and controls the travel (travel speed, steering, etc.) of the working vehicle 1 so as to move along the planned route to perform the automatic travel. Additionally, the vehicle controller 12 refers to the vehicle information and the sensing result from the sensing assembly 13d, performs the automatic travel also based on these pieces of information, and controls the travel, stop, travel speed, and steering of the working vehicle 1 so as to avoid the working vehicle 1 from hitting the obstacle detected by the sensing assembly 13d.

Note that, when a desired area is designated via the user interface 13a and the map of the area is displayed via the user interface 13a, the operator may set a goal point on the map of the area via the user interface 13a. Then, the information processor 11 may create (plan) a planned route from the current position of the vehicle body 3 toward the goal point, and cause goal information relating to the goal point and information indicating the planned route to be stored in the storage 18 in association with the area information.

As described above, when the operator designates a desired area and performs a predetermined travel start operation, the information processor 11 creates a costmap showing the distribution of costs each of which is a degree of difficulty for passage of the vehicle body 3, the traveling device 5, and the working device 2 with reference to an obstacle in the area, based on vehicle information and area information. At this time, the information processor 11 assigns a cost of a first predetermined value to a location where an obstacle is present, and assigns costs each of which is less than the first predetermined value to locations where no obstacles are present such that the costs decrease with increasing distance from the obstacle. Additionally, the costmap created by the information processor 11 includes a first costmap showing the distribution of costs each of which is a degree of difficulty for passage of the traveling device 5, and a second costmap showing the distribution of costs each of which is a degree of difficulty for passage of the vehicle body 3 and the working device 2.

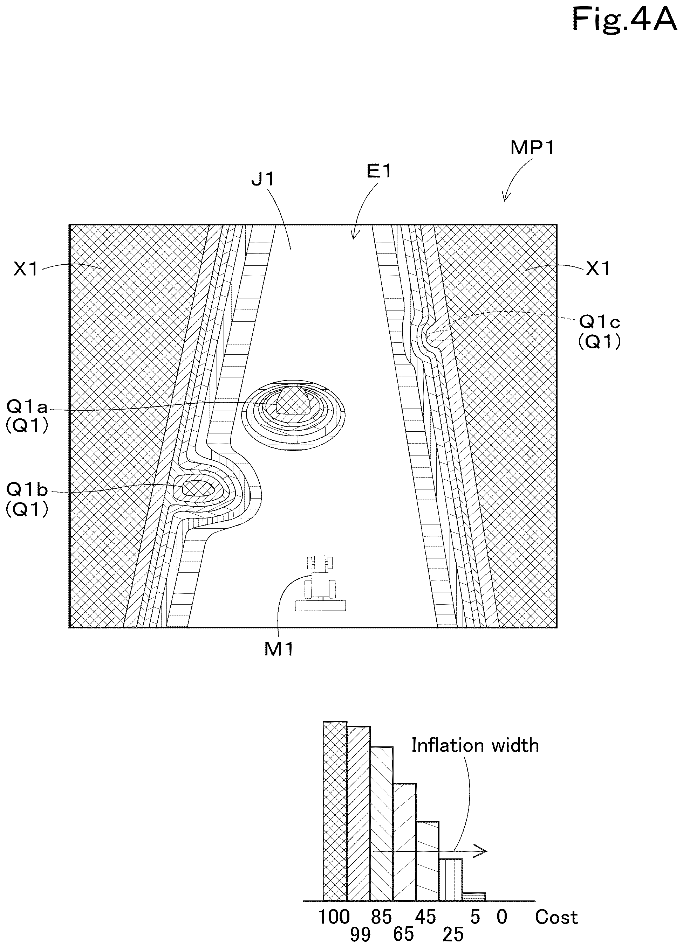

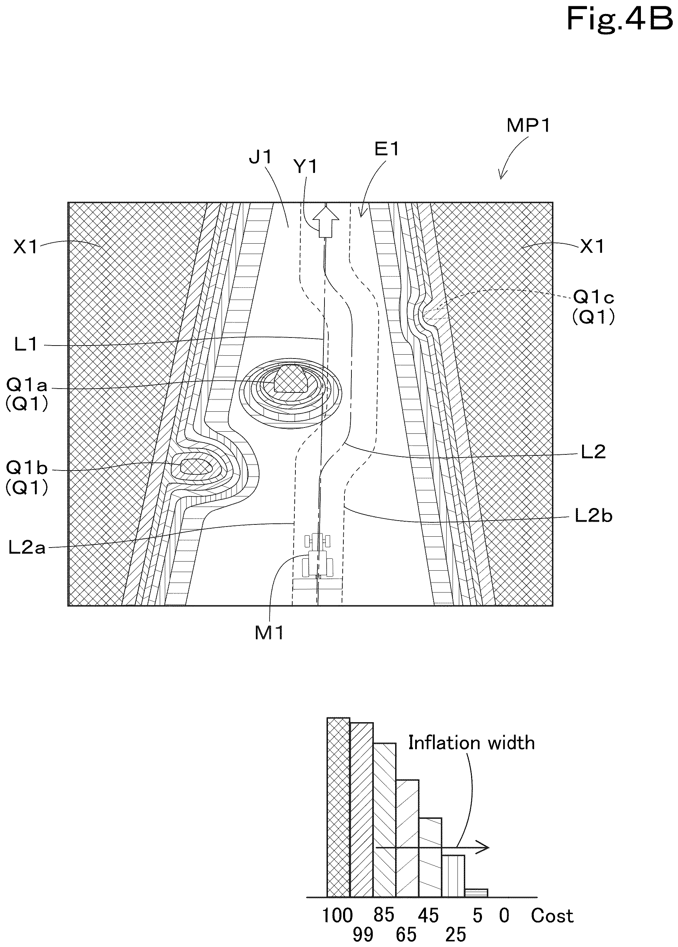

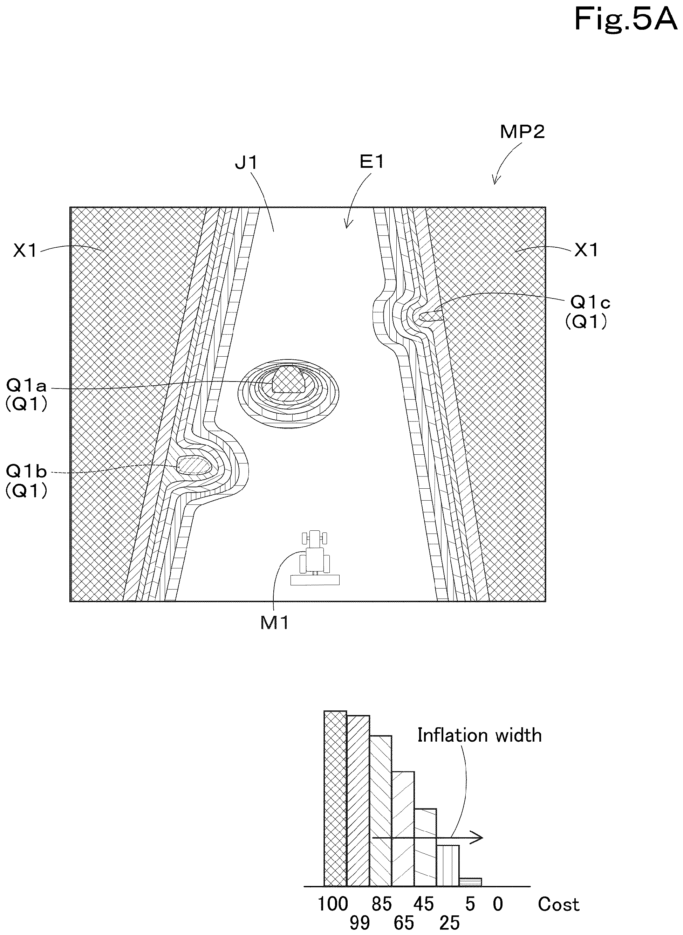

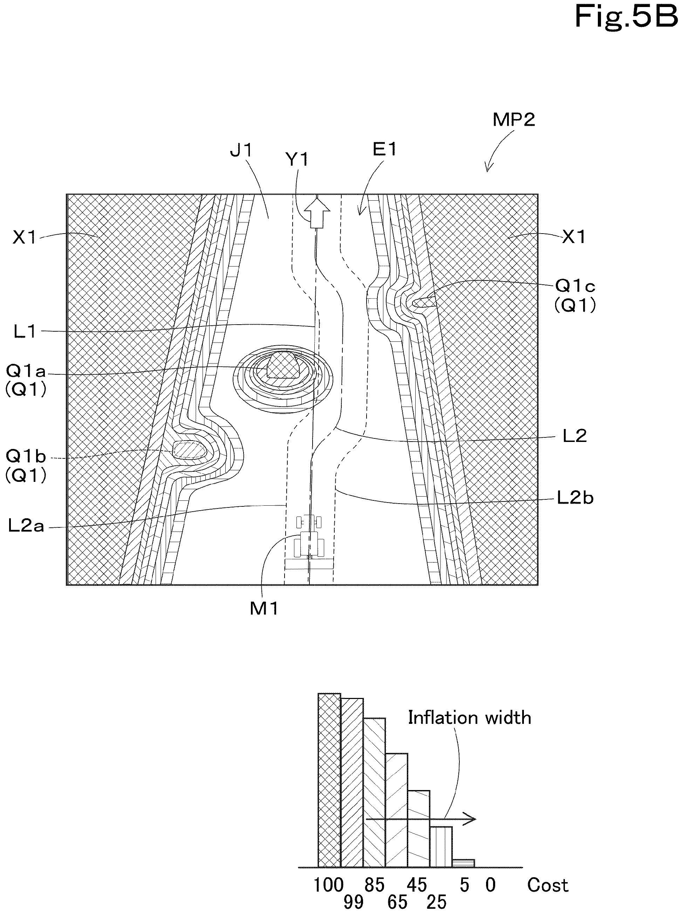

FIG. 4A is a diagram illustrating an example of a first costmap MP1. FIG. 5A is a diagram illustrating an example of a second costmap MP2. Specifically, FIG. 4A and FIG. 5A illustrate the cost distributions of portions (the surrounding area of the working vehicle 1) of the first costmap MP1 and the second costmap MP2. The same applies to costmaps MP1 and MP2 of FIGS. 4B and 5B described later.

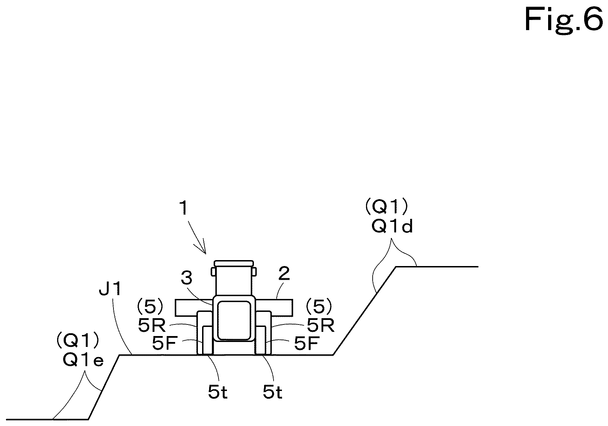

Additionally, the first costmap MP1 in FIG. 4A shows the distribution of costs each of which is a degree of difficulty for passage of ground contact portions 5t of the wheels 5F and 5R included in the traveling device 5 of the working vehicle 1, as illustrated in FIG. 6. The first costmap MP1 is used to determine through which location in the area the wheels 5F and 5R pass without causing the wheels 5F and 5R to hit (contact) an obstacle.

The second costmap MP2 in FIG. 5B shows the distribution of costs each of which is a degree of difficulty for passage of the vehicle body 3 of the working vehicle 1 and the working device 2 protruding laterally from the vehicle body 3 as illustrated in FIG. 6. Additionally, since the vehicle body 3 is not in contact with the ground surface normally and the working device 2 is in a position not in contact with the ground surface when the working vehicle 1 automatically travels toward the goal point, the second costmap MP2 shows the distribution of costs each of which is a degree of difficulty for passage of the vehicle body 3 and the working device 2 not in contact with the ground surface. The second costmap MP2 is used to determine through which location in the area the vehicle passes without causing the working device 2 and the vehicle body 3 to hit an obstacle.

For example, the information processor 11 generates a sensing image of the surrounding area of the working vehicle 1 based on sensing data outputted from the sensing assembly 13d that performs sensing in the range at a certain distance (for example, 20 to 50 m) from the working vehicle 1 during the automatic travel of the working vehicle 1. The sensing data is a sensing result and a type of area information. The sensing image is, for example, an image generated based on an imaging signal outputted from a camera included in the sensing assembly 13d. More specifically, the sensing image is a captured image of the front area of the working vehicle 1 based on an imaging signal outputted from the camera that captures an image of the front area (in the travel direction) of the working vehicle 1.

Note that, in addition to the sensing image of the front area of the working vehicle 1, the information processor 11 may generate, based on an imaging signal outputted from a camera that captures an image of at least one of the rear area, the left area, or the right area of the working vehicle 1, a sensing image in the corresponding direction. Additionally, the information processor 11 may generate an around view image looking down on the working vehicle 1 as a sensing image based on imaging signals outputted from a plurality of cameras that capture images of the front area, the rear area, the left area, and the right area of the working vehicle 1.

The information processor 11 creates the first costmap MP1 and the second costmap MP2 based on the sensing image. At this time, the first costmap MP1 and the second costmap MP2 may be created using artificial intelligent (AI). The AI may be provided in the information processor 11, or may be provided in the management server 20 or the terminal device 30. When the AI is included in the management server 20 or the terminal device 30, the information processor 11 directly or indirectly communicates with the management server 20 or the terminal device 30 by the communication device 13b to create the first costmap MP1 and the second costmap MP2.

For example, the information processor 11 performs segmentation processing (image processing) on a sensing image (camera image) by the AI to generate an annotation image. Then, the information processor 11 assigns costs to a location of an obstacle and locations around the obstacle indicated by the annotation image, and creates a first costmap MP1 and a second costmap MP2 based on the assigned costs and the annotation image. Additionally, when the information processor 11 causes the first costmap MP1 and the second costmap MP2 to be displayed (outputted) on the display of the user interface 13a (and/or the user interface 32), the information processor 11 causes the first costmap MP1 and the second costmap MP2 to be displayed as illustrated in FIGS. 4A to 5B, and renders a vehicle model M1 indicating the working vehicle 1 on the first costmap MP1 and the second costmap MP2.

As illustrated in FIGS. 4A to 5B, the information processor 11 assigns the maximum value of "100" as a cost (first predetermined value) to the location of an area E1 where an obstacle Q1 is present. Additionally, the information processor 11 also assigns the cost of "100" to an off-limits zone X1 of the area E1. That is, in the costmaps MP1 and MP2, the ranges to which the cost of "100" is assigned indicate the locations of the obstacle Q1 and the off-limits zone X1.

Note that the off-limits zone X1 is a zone where the working vehicle 1 is prohibited from entering. Information indicating the location of the off-limits zone X1 is included in the area information. For example, the information processor 11 may identify an agricultural field from the sensing result from the sensing assembly 13d, the sensing image, or the annotation image, and determine the agricultural field as the off-limits zone X1. In this case, when one agricultural field is set as the goal point, the information processor 11 does not determine the one agricultural field as the off-limits zone X1.

The information processor 11 assigns costs of "99" to "0" each of which is less than "100" to locations around the obstacle Q1 and the off-limits zone X1 such that the costs decrease with increasing distance from the obstacle Q1 and the off-limits zone X1. Note that the lower portions of FIGS. 4A to 5B present the correspondence between the values of the costs and the display forms (that is, the legend) in the costmaps MP1 and MP2.

As illustrated in FIGS. 4A to 5B, the information processor 11 assigns the cost of "99" to an inscribed range in the range at the first distance from the obstacle Q1 and the off-limits zone X1. The inscribed range may be set, for example, by setting the dimension of the radius of a circular region set for the working vehicle 1 (the traveling device 5, the vehicle body 3, and the working device 2) as the first distance in order to determine (predict) the possibility of contact between the working vehicle 1 (the traveling device 5, the vehicle body 3, and the working device 2) and the obstacle Q1. The range in which the cost of "100" and the cost of "99" are assigned is a range in which passage of the working vehicle 1 (the traveling device 5, the vehicle body 3, and the working device 2) is prohibited.

Additionally, the information processor 11 assigns the costs of "98" to "1" according to the distance from the obstacle Q1 and the off-limits zone X1 in a range at a second distance longer than the first distance, which is outside the range at the first distance from the obstacle Q1 and the off-limits zone X1. The range in which the costs of "98" to "1" are assigned is a range for separating the traveling device 5, the vehicle body 3, and the working device 2 from the obstacle Q1 and the off-limits zone X1, but is a range in which the traveling device 5, the vehicle body 3, and the working device 2 are allowed to pass.

Additionally, the range in which the costs of "98" to "1" are assigned is an inflation range (inflation width) in which the costs are inflated. In the present example embodiment, the information processor 11 extends the inflation range based on a predetermined exponential function, but the information processor 11 may extend the inflation range based on another function (for example, a linear function). Alternatively, the information processor 11 may extend the inflation range based on an exponential function or the like according to the types of the obstacle Q1 and the off-limits zone X1.

The information processor 11 assigns the cost of "0" to locations outside the range at the second distance from the obstacle Q1 and the off-limits zone X1. The range in which the cost of "0" is assigned is a range in which the traveling device 5, the vehicle body 3, and the working device 2 can stably pass. That is, the range with the cost of "0" assigned is also a range in which the traveling device 5, the vehicle body 3, and the working device 2 are allowed to pass. The values of the costs and the assignment ranges of the costs described above are examples, and this does not imply any limitation.

In order to assign the cost, the information processor 11 determines a specific obstacle capable of being hit by each of the vehicle body 3, the traveling device 5, and the working device 2 of the working vehicle 1 based on not only the locations of the vehicle body 3, the traveling device 5, and the working device 2 of the working vehicle 1, and the obstacle Q1 in the planar direction (horizontal direction) but also the heights of these from the ground surface (the positions in the up-down direction (vertical direction)). Note that the information processor 11 may determine a specific obstacle while the cabin 10 mounted on the upper portion of the vehicle body 3 is treated as a portion of the vehicle body 3. Then, the information processor 11 assigns the costs to the location at which the specific obstacle is present and the location at which the specific obstacle is not present as described above.

Thus, for example, when the height (the height from the ground surface) of an obstacle Q1b (Q1) on a path J1 illustrated in FIG. 4A is lower than the heights of the vehicle body 3 and the working device 2, the information processor 11 determines the obstacle Q1b as the specific obstacle for the traveling device 5. Then, the information processor 11 assigns the cost of "100" to the location at which the obstacle Q1b is present in the first costmap MP1, and assigns the costs of "99" to "1" to locations around the obstacle Q1b. Additionally, the information processor 11 does not determine the obstacle Q1b as the specific obstacle for the vehicle body 3 and the working device 2, and assigns the costs of "98" to "1" to the location at which the obstacle Q1b is present and the locations around the obstacle Q1b without assigning the cost of "100" indicating the location at which the obstacle Q1b is present and the cost of "99" indicating the inscribed range in the range at the first distance from the obstacle Q1b in the second costmap MP2 in FIG. 5.

Additionally, for example, when an obstacle Q1c (Q1) illustrated in FIG. 5 is a branch of a tree or the like protruding from the lateral side of the path J1 to the path J1 and is located higher than the traveling device 5 and is located at a height (height from the ground surface) equivalent to at least one of the vehicle body 3 or the working device 2, the information processor 11 determines the obstacle Q1c as the specific obstacle for at least one of the vehicle body 3 or the working device 2. Then, the information processor 11 assigns the cost of "100" to the location at which the obstacle Q1c is present, and assigns the costs of "99" to "1" to locations around (at least on the side where the path J1 is present of) the obstacle Q1c in the second costmap MP2. Additionally, the information processor 11 does not determine the obstacle Q1c as the specific obstacle for the traveling device 5, and assigns the costs of "98" to "1" to the location at which the obstacle Q1c is present and the locations around the obstacle Q1c without assigning the cost of "100" indicating the location at which the obstacle Q1c is present and the cost of "99" indicating the inscribed range in the first costmap MP1 in FIG. 4A.

Additionally, when an obstacle Q1a (Q1) on the path J1 illustrated in FIGS. 4A to 5B is matter such as another vehicle in contact with the ground surface having a height equivalent to the heights of the vehicle body 3 and the working device 2 of the working vehicle 1, the information processor 11 determines the obstacle Q1a as the specific obstacle for the traveling device 5, the vehicle body 3, and the working device 2. Then, the information processor 11 assigns the cost of "100" to the location at which the obstacle Q1a is present and assigns the costs of "99" to "1" to locations around the obstacle Q1a in the first costmap MP1 and the second costmap MP2. In this case, the locations and the range to which the costs of "100" to "1" corresponding to the obstacle Q1a are assigned in the first costmap MP1 are equivalent to the locations and the range in which the costs of "100" to "1" corresponding to the obstacle Q1a are assigned in the second costmap.

Additionally, as illustrated in FIG. 6, when an obstacle Q1d (Q1) such as a slope surface protruding higher than the working device 2 is present in the surrounding area of the working vehicle 1, the information processor 11 determines the obstacle Q1d as the specific obstacle for the traveling device 5, the vehicle body 3, and the working device 2. Then, the information processor 11 assigns the cost of "100" to the location at which the obstacle Q1d is present and assigns the costs of "99" to "1" to locations around the obstacle Q1d in the first costmap MP1 and the second costmap MP2. In this case, the locations at which the costs of "100" to "1" corresponding to the obstacle Q1d are assigned in the first costmap MP1 are closer to the working vehicle 1 than the locations at which the costs of "100" to "1" corresponding to the obstacle Q1d are assigned in the second costmap MP2, and the range in which the costs of "100" to "1" corresponding to the obstacle Q1d are assigned in the first costmap MP1 is wider than the range in which the costs of "100" to "1" corresponding to the obstacle Q1d are assigned in the second costmap MP2.

Additionally, when an obstacle Q1e (Q1) such as a dent, a groove, or a cliff that is located lower than the traveling device 5 is present in the surrounding area of the working vehicle 1, the information processor 11 determines the obstacle Q1e as the specific obstacle for the traveling device 5, and does not determine the obstacle Q1e as the specific obstacle for the vehicle body 3 and the working device 2. Then, the information processor 11 assigns the cost of "100" to the location at which the obstacle Q1e is present (including a side surface of the obstacle Q1e that is inclined downward) in the first costmap MP1, and assigns the costs of "99" to "1" to locations around the obstacle Q1e. Additionally, the information processor 11 does not assign the cost of "100" and the cost of "99" to the location at which the obstacle Q1e is present and does not assign the costs of "98" to "1" to locations around the obstacle Q1e in the second costmap MP2.

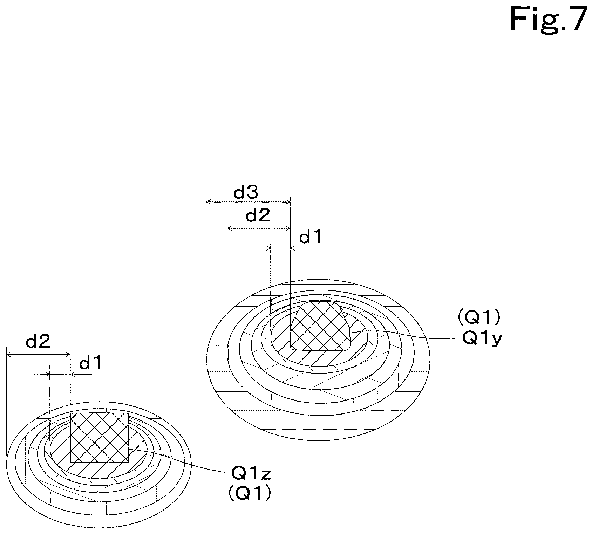

The information processor 11 may determine whether the obstacle Q1 is a moving obstacle Q1y which is movable or a stationary obstacle Q1z which is not movable based on the area information. Then, as illustrated in FIG. 7, the information processor 11 may assign costs such that the costs are higher in a predetermined range from the moving obstacle Q1z than in a predetermined range from the stationary obstacle Q1y.

For example, when the type of the obstacle Q1 indicated by the area information or the type of the obstacle (object) Q1 determined from the sensing result from the sensing assembly 13d is another vehicle, a person, an animal, or the like, the information processor 11 determines the obstacle Q1 as a moving obstacle Q1y. Additionally, when the type of the obstacle Q1 is matter which is not movable such as matter or a natural object that does not move by itself, the information processor 11 determines the obstacle Q1 as a stationary obstacle Q1z.

Then, the information processor 11 assigns the cost of "100" to each of the location at which the stationary obstacle Q1z is present and the location at which the moving obstacle Q1y is present. Additionally, the information processor 11 assigns the costs of "99" to "86" to locations in the range (inscribed range) at a first distance d1 from the stationary obstacle Q1z, and assigns the costs of "85" to "1" to locations in the range at a second distance d2 longer than the first distance d1, which is outside the range at the first distance d1 from the stationary obstacle Q1z. Additionally, the information processor 11 assigns the costs of "99" to "86" to locations in the range at the second distance d2 from the moving obstacle Q1y, and assigns the costs of "85" to "1" to locations in the range at a third distance d3 longer than the second distance d2, which is outside the range at the second distance d2 from the moving obstacle Q1y.

Accordingly, the costs assigned to the locations in the range from the first distance d1 to the second distance d2 around the moving obstacle Q1y are equal to or more than the costs assigned to the locations in the range from the first distance d1 to the second distance d2 around the stationary obstacle Q1z. Additionally, the inflation range of the costs of "99" to "1" corresponding to the moving obstacle Q1y is wider than the inflation range of the costs of "99" to "1" corresponding to the stationary obstacle Q1z.

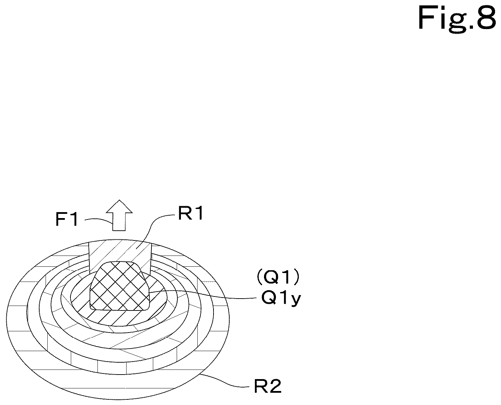

Additionally, the information processor 11 may predict a direction of movement F1 of the moving obstacle Q1y based on the sensing result from the sensing assembly 13d, and, for example, as illustrated in FIG. 8, assign costs such that the costs are higher in a portion of the predetermined range from the moving obstacle Q1y that is located in the direction of movement F1 from the moving obstacle Q1y than in a portion of the predetermined range from the moving obstacle Q1y that is not located in the direction of movement F1 from the moving obstacle Q1y. In the example of FIG. 8, the information processor 11 assigns the cost of "98" to a portion R1 that is located in the direction of movement F1 and assigns the costs of "97" to "1" to a portion R2 that is not located in the direction of movement F1, in the range from the second distance d2 to the third distance d3 around the moving obstacle Q1y. Additionally, the information processor 11 may monitor (detect) at least one of the orientation or the location of the moving obstacle Q1y from the sensing result, and predict the direction of movement F1 of the moving obstacle Q1y from time-series data of the monitoring result.

The information processor 11 may determine the type of an object different from the obstacle Q1 present in the surrounding area of the working vehicle 1 and the distance from the object to the obstacle Q1 indicated by the area information based on the sensing data outputted from the sensing assembly 13d during the automatic travel of the working vehicle 1. Then, the information processor 11 may assign a cost to the object according to the type of the object and the distance from the obstacle Q1. For example, object cost information indicating a cost value assigned to each type of the object is stored in the storage 18. The information processor 11 determines the type of the object and the distance from the object to the obstacle Q1, and then assigns the cost value corresponding to the type of the object to the location at which the object is present when the distance is equal to or less than a predetermined value.

Additionally, in a case where the ground surface is detected as the object based on the sensing data outputted from the sensing assembly 13d, the information processor 11 may further determine at least one of (i) whether the ground surface is paved, (ii) the degree of slope of the ground surface, or (iii) the direction of slope of the ground surface based on at least one of the map of the area E1 included in the area information, the sensing data, or the like, and assign the cost to the ground surface according to the result of the determination and the distance from the detected ground surface to the obstacle Q1. Specifically, for example, when the ground surface detected as the object is paved, the information processor 11 assigns the costs of "0" to "99" to the ground surface with decreasing distance from the ground surface to the obstacle Q1. In contrast, when the ground surface is not paved, the information processor 11 assigns any one of costs from a third predetermined value more than "0" (for example, the cost of "1" in FIGS. 4A and 4B) to "99" to the ground surface with decreasing distance from the ground surface to the obstacle Q1.

Additionally, when the ground surface detected as the object is a flat surface and is not a slope, the information processor 11 assigns the costs of "0" to "99" to the ground surface with decreasing distance from the ground surface to the obstacle Q1. In contrast, when the ground surface is a slope, the information processor 11 calculates the inclination of the ground surface based on the sensing data, assigns the costs of "1" to "99" to the ground surface as the inclination of the ground surface increases, and changes the costs assigned to the ground surface such that the costs increase with decreasing distance from the ground surface to the obstacle Q1.

Additionally, when the ground surface detected as the object is a downhill slope that is inclined downward with increasing distance from the working vehicle 1, the information processor 11 may assign the costs of "1" to "98" to the downhill slope. In contrast, when the ground surface is an uphill slope that is inclined upward with increasing distance from the working vehicle 1, the information processor 11 may assign any one of the costs from a fourth predetermined value more than "1" to "98" to the uphill slope.

Additionally, the information processor 11 may change the cost assigned to the ground surface as described above according to whether the traveling device 5 includes a crawler track. For example, when a traveling device including a crawler track travels on a paved ground surface (road), the travel performance is reduced in terms of travel speed or the like as compared with a case where the traveling device 5 including only wheels without a crawler track travels on the paved ground surface. In contrast, when the traveling device 5 including only wheels without a crawler track travels on an unpaved ground surface, the travel performance is reduced in terms of propelling force or the like as compared with a case where the traveling device including a crawler track travels on the unpaved ground surface.

Thus, the information processor 11 determines whether the traveling device 5 includes a crawler track based on the vehicle information, and determines whether the ground surface is paved based on the area information. Then, when the information processor 11 determines that the traveling device 5 does not include a crawler track (includes wheels), the information processor 11 does not change the cost of the paved ground surface, and changes the cost of the unpaved ground surface such that the cost increases by a predetermined value. In contrast, when the information processor 11 determines that the traveling device 5 includes a crawler track, the information processor 11 may not change the cost of the paved ground surface and may change the cost of the unpaved ground surface such that the cost decreases by a predetermined value.

Additionally, when the traffic regulation prescribes that the vehicle travels on either of the left side and the right side of the road, the information processor 11 may assign the cost of "0" or more to one side of the road and assign the cost of a value equal to or more than a fifth predetermined value more than "0" to the other side.

Additionally, the information processor 11 may change the costs assigned to the locations around the obstacle Q1 according to the type of the working device 2 attached to the working vehicle 1. For example, the information processor 11 determines whether the working device 2 is a mounted working device to be mounted on the vehicle body 3 via the linkage 9 or a towed working device to be towed by the vehicle body 3 based on the vehicle information. Then, when the information processor 11 determines that the working device 2 is a towed working device, the information processor 11 extends the inflation range of the costs of "98" to "1" assigned to the locations around the obstacle Q1 by a predetermined amount, and assigns costs more than the costs of "98" to "1" to the locations at each of which the costs of "98" to "1" are assigned before the extension. In contrast, when the information processor 11 determines that the working device 2 is a mounted working device, the information processor 11 may not change the costs assigned to the locations around the obstacle Q1 or may reduce the costs by a predetermined value each.

Additionally, the information processor 11 may create the first costmap and the second costmap as described above only for the surrounding area of the working vehicle 1 that can be sensed by the sensing assembly 13d during the automatic travel of the working vehicle 1.

Alternatively, the information processor 11 may also create the first costmap and the second costmap also for another portion of the area E1 that cannot be sensed by the sensing assembly 13d. In this case, based on the vehicle information and the area information, the information processor 11 assigns a cost to each of the location at which the obstacle Q1 is present and the location at which the obstacle Q1 is not present as described above, and associates information indicating the value and range of the assigned cost with the map information of the area E1 included in the area information to create the first costmap and the second costmap.

Additionally, the information processor 11 may determine a specific obstacle that is present in the surrounding area of the working vehicle 1 (in the range at a certain distance) and capable of being hit by at least one of the vehicle body 3, the traveling device 5, or the working device 2 among a plurality of obstacles Q1 indicated by the area information, based on the sensing result from the sensing assembly 13d and the current position of the vehicle body 3 detected by the position detector 13c in addition to the vehicle information and the area information. Then, the information processor 11 may assign the cost which is the first predetermined value of "100" to the location at which the specific obstacle is present, and assign the costs of "99" to "0" to locations around the specific obstacle such that the costs decrease with increasing distance from the specific obstacle.

As described above, the information processor 11 creates the costmaps MP1 and MP2 based on the area information (including information of an obstacle and an object in an area inputted by the sensing assembly 13d) during (after the start of) the automatic travel of the working vehicle 1. Then, the information processor 11 generates control information based on the created costmaps MP1 and MP2, and outputs the control information to the vehicle controller 12. The vehicle controller 12 controls the travel of the working vehicle 1 based on the control information to perform (continue) the automatic travel of the working vehicle 1 toward the goal point such that the vehicle body 3, the traveling device 5, and the working device 2 pass through locations at each of which the corresponding assigned cost is equal to or less than the second predetermined value less than the cost of "100" which is the first predetermined value.

The second predetermined value is the upper limit value of the cost to be passed through by the vehicle body 3, the traveling device 5, and the working device 2. For example, the cost of "85" is set as the second predetermined value, and the costs of "85" to "0" are set as the costs equal to or less than the second predetermined value. The range of the costs equal to or less than the second predetermined value is an example, and this does not imply any limitation. A range of costs less than the cost of "99" may be set as the costs equal to or less than the second predetermined value.

The control information outputted by the information processor 11 may include, for example, information indicating the costmaps MP1 and MP2. In this case, the vehicle controller 12 controls the travel of the working vehicle 1 to perform the automatic travel of the working vehicle 1 such that the vehicle body 3, the traveling device 5, and the working device 2 pass through the locations at each of which the corresponding assigned cost is "85" to "0" while the vehicle body 3 does not move away from the planned route as much as possible (as quickly as possible), based on the costmaps MP1 and MP2 included in the control information, the positions of the vehicle body 3 detected by the position detector 13c, the position of the goal point, the planned route, and the like.

The first costmap MP1 illustrated in FIG. 4B and the second costmap MP2 illustrated in FIG. 5B indicate a route L2 (indicated by a one-dot chain line) along which the location of the vehicle body 3 moves and routes L2a and L2b (indicated by broken lines) along which the left end portion and the right end portion of the working device 2 move under the travel control by the vehicle controller 12. These are rendered on the first costmap MP1 and the second costmap MP2 when the information processor 11 displays (outputs) the first costmap MP1 and the second costmap MP2 on the display of the user interface 13a (and/or the user interface 32). The route L2 is also a route for the working vehicle 1 to travel while avoiding hitting the obstacle Q1 (and entering the off-limits zone X1). At least one of the vehicle controller 12 or the information processor 11 calculates the routes L2, L2a, and L2b based on the costmaps MP1 and MP2, the vehicle information, and the goal information.

Also, the control information outputted by the information processor 11 may include a travel route of the working vehicle 1 instead of or in addition to the costmaps MP1 and MP2. In this case, the information processor 11 determines (calculates) the travel route L2 for the working vehicle 1 (vehicle body 3) to travel toward the goal point such that the vehicle body 3, the traveling device 5, and the working device 2 pass through locations at each of which the corresponding assigned cost (the cost of "85" to "0") is equal to or less than the second predetermined value, based on the costmaps MP1 and MP2, the vehicle information, and the goal information. In FIG. 4B or the like, the direction in which the goal point is present is indicated by arrow Y1.

Additionally, the information processor 11 determines the travel route L2 such that the sum of costs assigned to locations to be passed through by at least one of the vehicle body 3, the traveling device 5, or the working device 2 before the working vehicle 1 reaches the goal point is at or around a predetermined target value. The target value may be set to a first target value which is relatively low such that the vehicle body 3, the traveling device 5, and the working device 2 do not approach the obstacle Q1. Alternatively, the target value may be set to a second target value which is relatively high and more than the first target value, so as to eliminate or reduce the likelihood that the vehicle body 3, the traveling device 5, and the working device 2 move away from the obstacle Q1 more than necessary and the efficiency of travel of the working vehicle 1 decreases. Alternatively, instead of the information processor 11, the vehicle controller 12 may determine the travel route L2 as described above, and in this case, the target value may be set as described above.

The information processor 11 outputs the control information indicating the travel route L2 determined as described above to the vehicle controller 12. The vehicle controller 12 controls the travel of the working vehicle 1 to perform (continue) the automatic travel based on the travel route L2 indicated by the control information.

The travel route L2 is a route for the working vehicle 1 (the vehicle body 3, the traveling device 5, and the working device 2) to avoid hitting the obstacle Q1, and is a route that replaces a portion of the planned route L1 (indicated by a broken line) as illustrated in FIGS. 4B and 5B. Thus, after performing the automatic travel of the working vehicle 1 based on the travel route L2, the vehicle controller 12 performs (continues) the automatic travel of the working vehicle 1 based on the planned route L1.

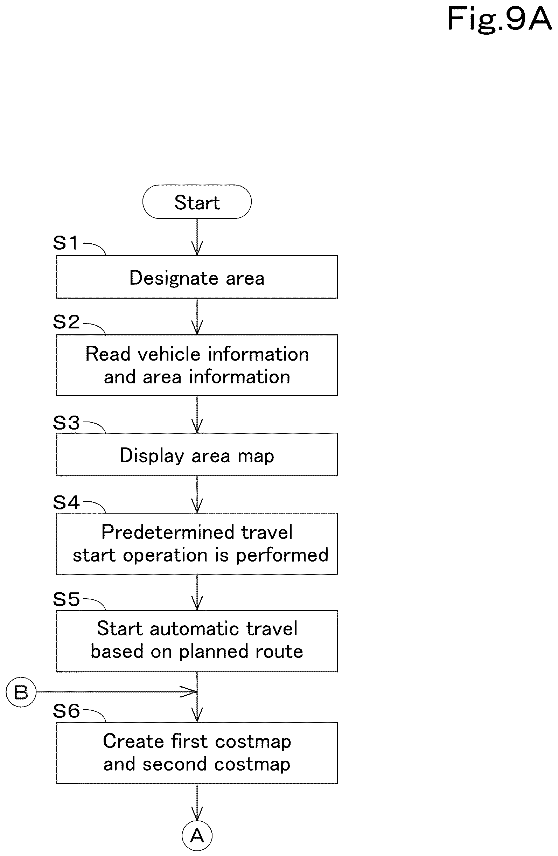

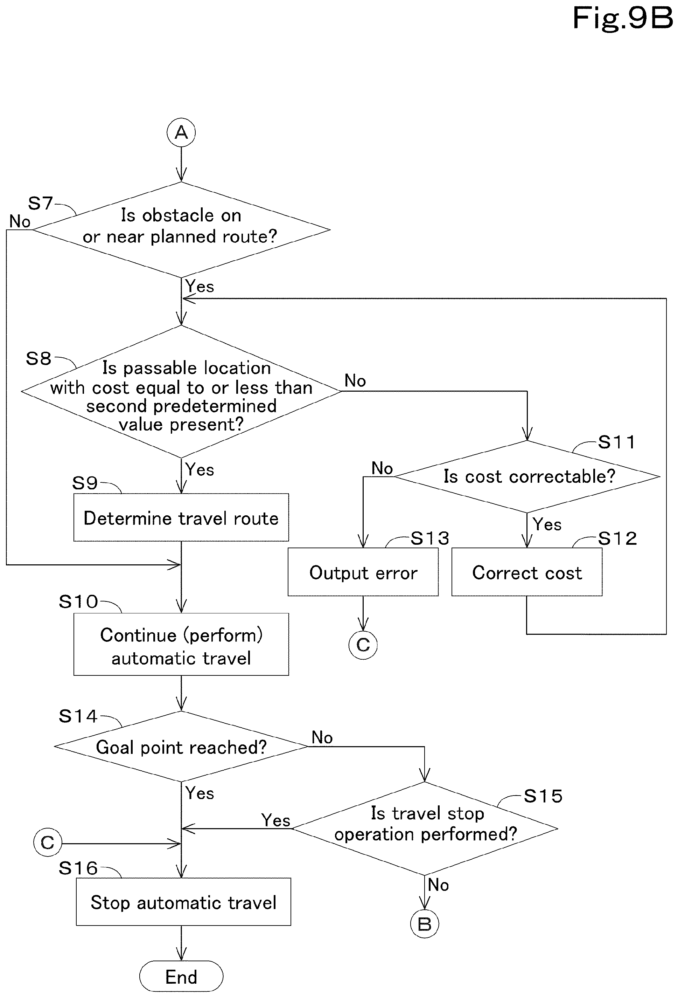

FIGS. 9A and 9B are flowcharts presenting an example of an operation of the automatic travel assistance system 100, and presenting operations of the information processor 11 and the vehicle controller 12 described above. Each step in FIGS. 9A and 9B is performed by at least one of the information processor 11 or the vehicle controller 12 according to the software programs stored in the internal memories of the information processor 11 and the vehicle controller 12.

Information indicating any one of areas is inputted via the user interface 13a (and/or the user interface 32, the same applies hereinafter) of the working vehicle 1. Thus, the area is designated (S1 in FIG. 9A). Then, the information processor 11 and the vehicle controller 12 read vehicle information and area information corresponding to the inputted information from the storage 18 (S2). Then, the information processor 11 displays a map of the area via the user interface 13a based on the area information (S3). At this time, a path and an obstacle Q1 in the area, a goal point set in the area, a planned route L1 to the goal point, and the like are indicated on the map of the area.

Then, a predetermined travel start operation for causing the working vehicle 1 to perform automatic travel toward the goal point is performed through at least one of the user interface 13a or the manual operator of the operation unit 17 (S4). Then, the vehicle controller 12 starts the automatic travel of the working vehicle 1 based on the planned route L1 and the like (including the position of the vehicle body 3 detected by the position detector 13c) (S5). Additionally, the information processor 11 creates a first costmap MP1 and a second costmap MP2 of the surrounding area of the working vehicle 1 (S6). The information processor 11 may display (output) the created first costmap MP1 and second costmap MP2 on the display of the user interface 13a.

Then, when there are no obstacles Q1 on the planned route L1 or near the planned route L1 (in the range at the second distance from the planned route L1) in the travel direction of the working vehicle 1 (S7 in FIG. 9B: NO), the vehicle controller 12 continues (performs) the automatic travel of the working vehicle 1 based on the planned route L1 (S10).

In contrast, when an obstacle Q1 is present on the planned route L1 or near the planned route L1 in the travel direction of the working vehicle 1 (S7: YES), the information processor 11 and the vehicle controller 12 refer to the first costmap MP1 and the second costmap MP2 to determine whether there is a location at which the corresponding assigned cost is equal to or less than the second predetermined value and which is passable by the vehicle body 3, the traveling device 5, and the working device 2.

At this time, when there is a location at which the corresponding assigned cost is equal to or less than the second predetermined value and which is passable by the vehicle body 3, the traveling device 5, and the working device 2 (S8: YES), at least one of the information processor 11 or the vehicle controller 12 determines (calculates) a travel route L2 for the vehicle body 3, the traveling device 5, and the working device 2 to pass through the location at which the corresponding assigned cost is equal to or less than the second predetermined value (S9). Then, the vehicle controller 12 controls the travel of the working vehicle 1 based on the travel route L2 and the like, and continues (performs) the automatic travel (S10). The information processor 11 may render the travel route L2 on the costmap MP1 or MP2 displayed on the display of the user interface 13a.

Then, when the location of the vehicle body 3 does not reach the goal point yet (S14: NO) and a predetermined travel stop operation for stopping the automatic travel of the working vehicle 1 is not performed (S15: NO), the information processor 11 re-creates the first costmap MP1 and the second costmap MP2 of the surrounding area of the working vehicle 1 (S6 in FIG. 9A), and repeats steps in FIG. 9B and later.

Additionally, when an obstacle Q1 is present on the planned route L1 or near the planned route L1 in the travel direction of the working vehicle 1 (S7: YES), and another obstacle Q1 or an off-limits zone X1 is present near the obstacle Q1, the information processor 11 and the vehicle controller 12 determine that there are no locations at each of which the corresponding assigned cost is equal to or less than the second predetermined value and each of which is passable by the vehicle body 3, the traveling device 5, and the working device 2 (S8: NO). In this case, the information processor 11 further determines whether there is a location at which the cost is correctable in the locations around the obstacle Q1 on or near the planned route L1.

The information processor 11 refers to the first costmap MP1 and the second costmap MP2, and when costs less than the cost of "99" (and the cost of "100") are assigned to the locations around the obstacle Q1 on or near the planned route L1, the information processor 11 determines that there is a location at which the cost is correctable (S11: YES), and corrects the cost assigned to the location such that the cost decreases (S12). At this time, the information processor 11 re-assigns the cost of the second predetermined value (cost of "85") or the cost less than the second predetermined value to the locations at each of which the corresponding assigned cost is "98" to "86" among locations around the obstacle Q1 on or near the planned route L1 in the first costmap MP1 and the second costmap MP2.

Then, the information processor 11 determines again whether there is a location at which the corresponding assigned cost is equal to or less than the second predetermined value and which is passable by the vehicle body 3, the traveling device 5, and the working device 2, and when there is the location (S8: YES), steps in step S9 and later are performed.

Additionally, when there are no locations at each of which the corresponding assigned cost is equal to or less than the second predetermined value and each of which is passable by the vehicle body 3, the traveling device 5, and the working device 2 even after the cost is corrected (S8: NO), the information processor 11 determines again whether there is a location at which the cost is correctable around the obstacle Q1 on or near the planned route L1. In this case, when the costs ("98" to "86") less than the cost of "99" and more than the second predetermined value are not assigned to the locations around the obstacle Q1 on or near the planned route L1, it is determined that there are no locations at each of which the cost is correctable (S11: NO).

Then, the information processor 11 outputs error information indicating that the working vehicle 1 cannot travel due to the presence of the obstacle Q1, via the user interface 13a (S13). At this time, the information processor 11 may cause a message or the like indicating the error information to be displayed on the display of the user interface 13a. Additionally, the information processor 11 may transmit the error information to the terminal device 30 by the communication device 13b, and cause a message or the like indicating the error information to be displayed on the display of the user interface 32 of the terminal device 30. Additionally, the information processor 11 outputs a stop command for the automatic travel to the vehicle controller 12, and the vehicle controller 12 stops the automatic travel of the working vehicle 1 according to the stop command (S16).

Additionally, after step S10, when the location of the vehicle body 3 reaches the goal point Pg (S14: YES), the information processor 11 outputs a stop command, and the vehicle controller 12 stops the automatic travel of the working vehicle 1 according to the stop command (S16). Additionally, before the location of the vehicle body 3 reaches the goal point Pg (S14: NO), when the predetermined travel stop operation is performed via at least one of the user interface 13a or the manual operator of the operation unit 17 (S15: YES), the information processor 11 outputs a stop command, and the vehicle controller 12 stops the automatic travel of the working vehicle 1 (S16).

In the above-described example embodiment, the example in which the costmaps MP1 and MP2 are created during the automatic travel of the working vehicle 1 has been described, but this does not imply any limitation. The information processor 11 may create the costmaps MP1 and MP2 before the start of the automatic travel of the working vehicle 1. Alternatively, before the start of the automatic travel of the working vehicle 1, the information processor 11 may plan (determine) the travel route L2 based on the costmaps MP1 and MP2, the vehicle information, and the like.

In a case where the annotation image which is the basis of the costmaps MP1 and MP2 is generated by the AI based on the captured image (sensing image) of the camera included in the sensing assembly 13d, when the number of pieces of data (the number of images) learned by the AI is small, the recognition ratio of the agricultural field and the accuracy of the annotation image are lowered. In particular, weeds and unpaved roads (unpaved paths and roads) around the agricultural field are erroneously recognized as the agricultural field by the AI. As a countermeasure against this, for example, the information processor 11 generates a large number of images of agricultural fields including weeds and unpaved roads from a large number of other images, and causes the AI to learn the images.

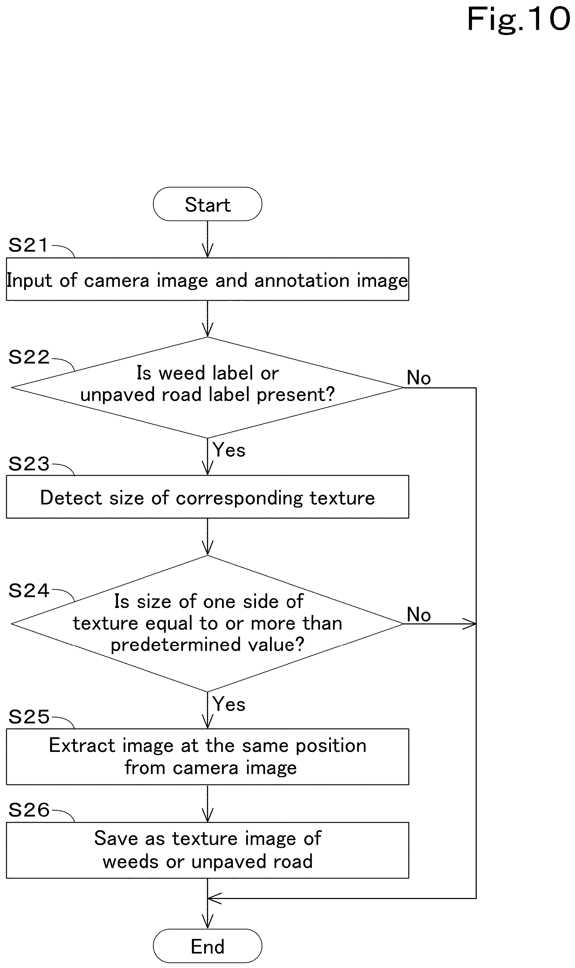

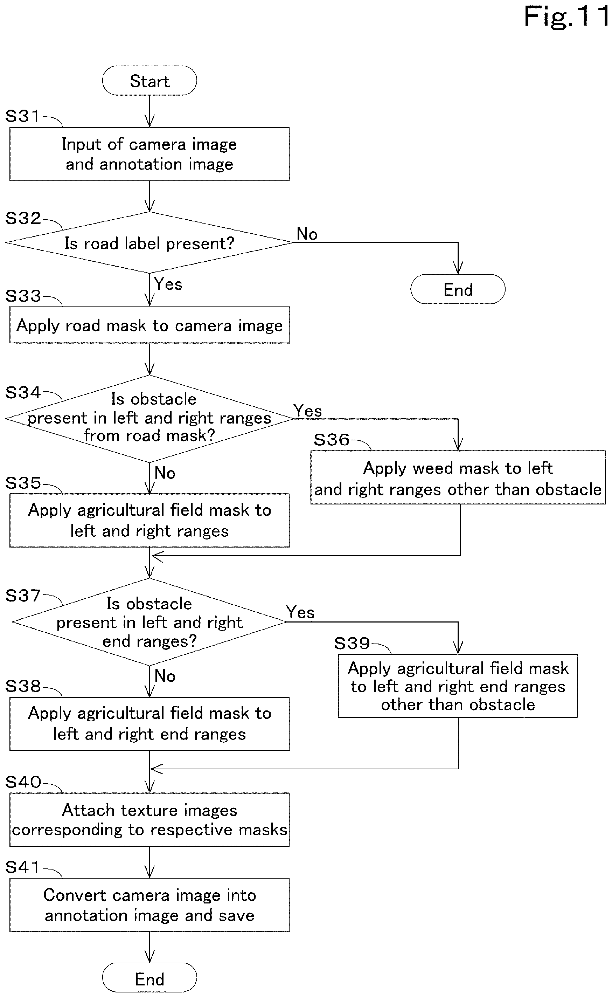

For this purpose, first, images (textures) of weeds and an unpaved road are prepared. FIG. 10 is a flowchart presenting an example of an image generation process for weeds and an unpaved road. In the present example embodiment, each step in FIG. 10 is performed by, for example, the AI included in the information processor 11 or the like according to a predetermined software program, but may be performed by an AI included in another device or a processor such as a CPU. The same applies to each step of the flowchart of FIG. 11 described later.

When data of a camera image and data of an annotation image generated in advance from the camera image are inputted from an open dataset, a custom dataset, or the like (S21 in FIG. 10), the AI reproduces the camera image and the annotation image. Then, the AI searches for data of a weed label indicating weeds and data of an unpaved road label indicating an unpaved road from the data of the annotation image.

When the data of the weed label or the unpaved road label is present in the data of the annotation image (S22: YES), the AI detects the size (the number of pixels) of each side of a texture of the weeds or the unpaved road in the annotation image corresponding to the label (S23). Then, when the size of at least one side of the texture is equal to or more than a predetermined value (predetermined pixels) (S24: YES), the AI detects the rendered position of the texture in the annotation image, extracts an image at the same position as the rendered position from the camera image (S25), and saves the extracted image as the texture of the weeds or the unpaved road in a predetermined storage (for example, the storage 18) (S26).

In contrast, when data of the weed label and data of the unpaved road label are not present in the data of the annotation image (S22: NO), the AI does not save the texture of the weeds or the unpaved road based on the camera image. Additionally, even though data of the weed label or the unpaved road label is present in the data of the annotation image (S22: YES), the AI does not save the texture of the weeds or the unpaved road based on the camera image when the size of each side of the texture corresponding to the label is less than the predetermined value (S24: NO).

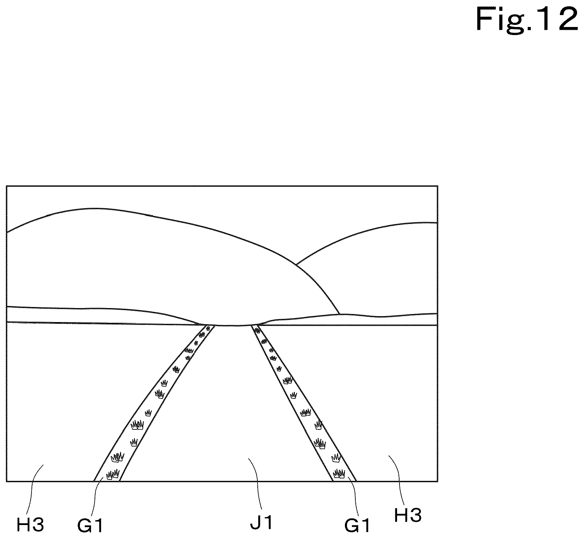

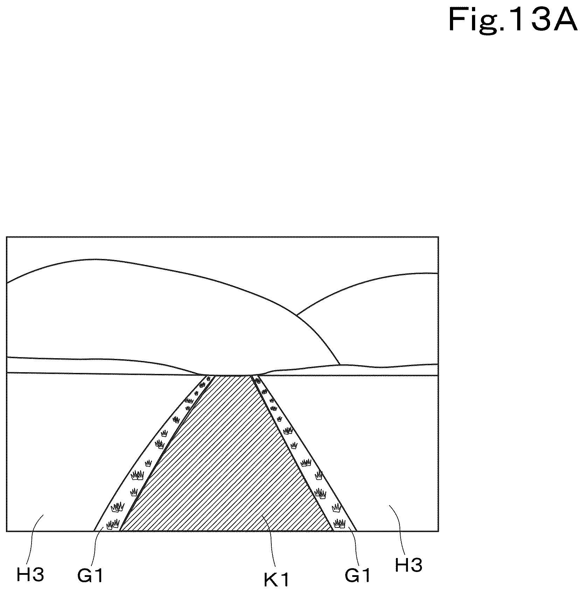

After the textures of the weeds and the unpaved road are prepared as described above, an image of an agricultural field including weeds and an unpaved road, which is an image similar to a captured image of the camera included in the sensing assembly 13d of the working vehicle 1, is generated in a pseudo manner from another image. FIG. 11 is a flowchart presenting an example of an image generation process for an agricultural field. FIG. 12 is a simple image of an example of a camera image. FIGS. 13A to 13D are images showing an example of generation of an annotation image.

When data of a camera image, in which, for example, a path J1 is present at the center as illustrated in FIG. 12, and data of an annotation image generated in advance from the camera image are inputted from an open dataset, a custom dataset, or the like (S31 in FIG. 11), the AI reproduces the camera image and the annotation image. The reason why the data of the camera image in which the path J1 is present at the center as shown in FIG. 12 is inputted is that the camera image is similar to the captured image of the camera included in the sensing assembly 13d during the travel of the working vehicle 1. That is, the path is also shown at the center of the captured image of the camera included in the sensing assembly 13d. Note that, although the camera image in FIG. 12 shows a weed area G1 where weeds are growing and another land H3 on each of both the left and right sides of the path J1, a camera image in which the weed area G1 is not shown may be input. Also, the land H3 may be an agricultural field or a land where a structure is present other than an agricultural field.

The AI searches for data of a road label from the data of the inputted annotation image. At this time, the AI treats both a paved road label indicating a paved path (road) J1 and an unpaved road label indicating an unpaved road J1 as road labels.

When the data of the road label is present in the data of the annotation image (S32: YES), the AI detects the rendered position of the road (path) in the annotation image corresponding to the road label, and applies a predetermined road mask K1 to a corresponding location of the camera image corresponding to the rendered position (S33 in FIG. 11, FIG. 13A).

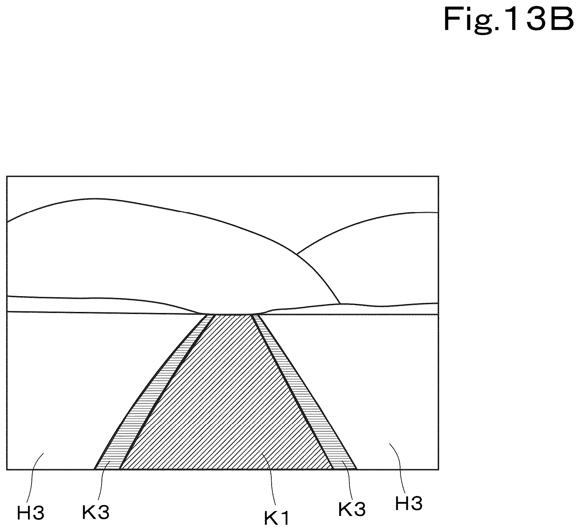

Then, the AI confirms whether a predetermined obstacle is present in each of a left range from the road mask to a position moved leftward by a predetermined number of pixels and a right range from the road mask to a position moved rightward by a predetermined number of pixels in the camera image, and when no obstacle is present (S34 in FIG. 11: NO), the AI applies a predetermined agricultural field mask K2 to the left range and the right range (S35). In contrast, when an obstacle is present in at least one of the left range or the right range (S34: YES), the AI applies a predetermined weed mask K3 to a location where no obstacle is present in the left range and the right range (S36, FIG. 13B).

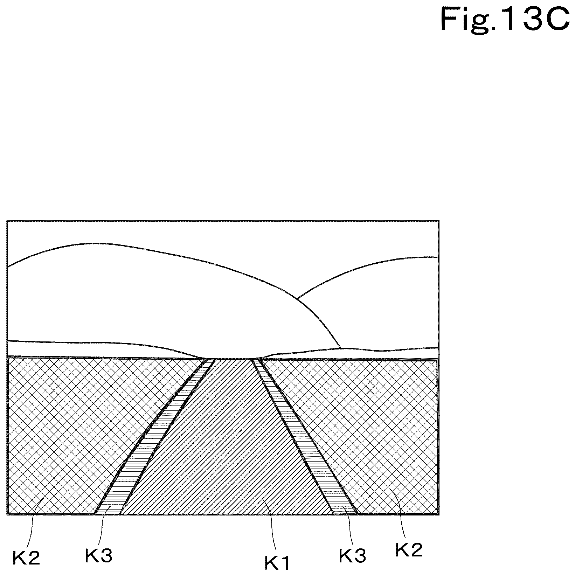

The AI confirms whether an obstacle is present in each of a left end range and a right end range from the applied mask to the corresponding ends in the left direction and the right direction of the camera image after step S35 or step S36 in FIG. 11, and in a case where an obstacle is not present (S37: NO), the AI applies the agricultural field mask K2 to the left end range and the right end range (S38, FIG. 13C). In contrast, in a case where an obstacle is present in at least one of the left end range or the right end range (S37 in FIG. 11: YES), the agricultural field mask K2 is applied to a location where no obstacle is present in the left end range and the right end range (S39). That is, the AI regards the portions on both the left and right sides of the path J1 shown in the camera image as the agricultural field or the weed area in steps S34 to S39.

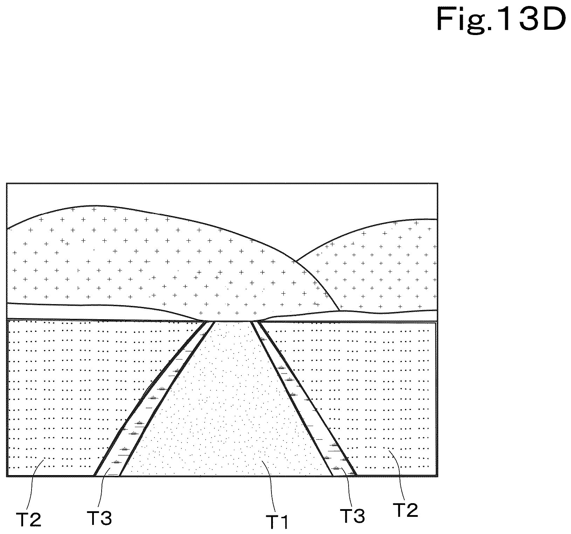

Then, the AI attaches the texture images respectively corresponding to the masks K1 to K3 applied to the camera image (S40). At this time, the AI attaches a predetermined unpaved road texture image to the road mask when the label corresponding to the road mask is the unpaved road label, and attaches a predetermined paved road texture image to the road mask when the label corresponding to the road mask is the paved road label. In the example shown in FIG. 13D, a paved road texture image T1 is attached to the road mask K1. Additionally, the AI attaches a predetermined weed texture image T3 to the weed mask K3 applied to the camera image, and attaches a predetermined agricultural field texture image T2 to the agricultural field mask K2. Additionally, when an obstacle is present, the AI attaches an obstacle texture image corresponding to an obstacle label indicating the obstacle in a location where the obstacle is present.

Then, the AI converts the camera image with the texture images T1 to T3 respectively corresponding to the masks K1 to K3 attached as described above into an annotation image (the state of FIG. 13D), and saves data of the annotation image in a predetermined storage (S41 in FIG. 11). Thus, an annotation image in which the weed area is interposed between the path (paved road, unpaved road) and the agricultural field is generated. That is, a sample of an annotation image to be generated (an image for AI learning) is generated from a captured image of the camera included in the sensing assembly 13d of the working vehicle 1. Note that, in the annotation image shown FIG. 13D, corresponding texture images are also attached to matter other than the agricultural field, the weeds, and the paved road.

Then, the AI converts a camera image inputted thereafter into an annotation image based on the data of the texture images saved in the generation process of FIG. 10 and the data of the annotation image saved in the generation process of FIG. 11, and learns an image of an agricultural field. Additionally, the operator may compare the annotation image saved by the AI with the camera image corresponding thereto, correct the positions of the texture images of the unpaved road, the weeds, and the agricultural field in the annotation image, and overwrite the storage with the corrected annotation image.

In the above-described example embodiment, the example in which the information processor 11 and the vehicle controller 12 are provided in the working vehicle 1 has been described, but this does not imply any limitation. The information processor 11 and the vehicle controller 12 may be provided in the management server 20, may be provided in a remote device (terminal device) that remotely operates or monitors the working vehicle 1, or may be a computer provided in a device other than the working vehicle 1, such as the terminal device 30. That is, it is only required that the information processor 11 and the vehicle controller 12 are provided in at least one of the working vehicle 1, or a server or a terminal device that can communicate with the working vehicle 1. Alternatively, the information processor 11 and the vehicle controller 12 may be provided in different devices or machines.

Also, the input interfaces (the user interfaces 13a and 32, the communication device 13b, the position detector 13c, and the sensing assembly 13d) that receive input of the vehicle information and the area information may be provided in the working vehicle 1, the management server 20, the terminal device 30, a remote device, or a device or a machine different from these devices. Also, one computer may be configured to operate as the information processor 11 and the vehicle controller 12. Also, the management server 20 and the terminal device 30 may be omitted from the automatic travel assistance system 100.

Automatic travel assistance systems 100 of example embodiments as has been described include features and achieve effects as described in the following items.

(Item 1) An automatic travel assistance system 100 according to an example embodiment of the present invention includes an input interface 13a, 32, 13b, 13c, 13d (user interface 13a, 32, communication device 13b, position detector 13c, sensing assembly 13d) to receive input of vehicle information relating to a working vehicle 1, goal information relating to a goal point in a predetermined area E1, and area information relating to at least one obstacle Q1 in the area E1, the working vehicle 1 including a traveling device 5 to cause a vehicle body 3 to travel and being configured to attach thereto a working device 2 to perform work, an information processor 11 configured or programmed to create a costmap MP1, MP2 of the area E1 showing a cost distribution by assigning a cost of a first predetermined value to a location where the at least one obstacle Q1 is present and assigning costs each of which is less than the first predetermined value to locations where no obstacles Q1 are present such that the costs decrease with increasing distance from the at least one obstacle Q1, each of the cost and the costs being a degree of difficulty for the vehicle body 3, the traveling device 5, and the working device 2 attached to the working vehicle 1 to pass through the corresponding location, and a vehicle controller 12 configured or programmed to control travel of the working vehicle 1 such that the vehicle body 3, the traveling device 5, and the working device 2 pass through locations at each of which the corresponding assigned cost is equal to or less than a second predetermined value less than the first predetermined value, to cause the working vehicle 1 to perform automatic travel toward the goal point.

With the configuration of Item 1 described above, the costmap MP1, MP2 showing the distribution of the costs each of which is the degree of difficulty for the vehicle body 3, the traveling device 5, and the working device 2 to pass through the corresponding location is created, and the travel of the working vehicle 1 is controlled to perform the automatic travel such that the vehicle body 3, the traveling device 5, and the working device 2 travel toward the goal point while avoiding the vehicle body 3, the traveling device 5, and the working device 2 from hitting the at least one obstacle Q1 based on the costmap MP1, MP2. Thus, it is possible to cause the working vehicle 1 with the working device 2 attached to perform the automatic travel stably.

(Item 2) In the automatic travel assistance system 100 according to item 1, the information processor 11 is configured or programmed to, before a start of and/or during the automatic travel of the working vehicle 1, create the costmap MP1, MP2 based on the area information inputted via the input interface 13a to 13d, 32 and output control information based on the costmap MP1, MP2, and the vehicle controller 12 is configured or programmed to control the travel of the working vehicle 1 to perform the automatic travel based on the control information.

With the configuration of Item 2 described above, before the start of and/or during the automatic travel of the working vehicle 1, the costmap MP1, MP2 is created according to the presence situation of the at least one obstacle Q1, and the travel of the working vehicle 1 is controlled to perform the automatic travel based on the costmap MP1, MP2. Thus, it is possible to cause the working vehicle 1 to perform the automatic travel stably while more reliably avoiding the vehicle body 3, the traveling device 5, and the working device 2 from hitting the at least one obstacle Q1 in the surrounding area.

(Item 3) In the automatic travel assistance system 100 according to item 2, the information processor 11 is configured or programmed to, based on the costmap MP1, MP2, the vehicle information, and the goal information, determine a travel route L2 for the working vehicle 1 to travel toward the goal point such that the vehicle body 3, the traveling device 5, and the working device 2 pass through the locations at each of which the corresponding assigned cost is equal to or less than the second predetermined value, and output the control information indicating the travel route L2, and the vehicle controller 12 is configured or programmed to control the travel of the working vehicle 1 and perform the automatic travel based on the travel route L2.

With the configuration of Item 3 described above, the working vehicle 1 can automatically travel based on the travel route L2, avoid the traveling device 5, the vehicle body 3, and the working device 2 from hitting the at least one obstacle Q1 with safety margins, and reduce the frequency of rapidly performing avoidance operations such as steering, deceleration, and stop for avoiding the hitting. Thus, it is possible to cause the working vehicle 1 to perform the automatic travel toward the goal point stably and efficiently.

(Item 4) In the automatic travel assistance system 100 according to item 3, the information processor 11 is configured or programmed to determine the travel route L2 such that the sum of costs assigned to locations to be passed through by at least one of the vehicle body 3, the traveling device 5 or the working device 2 before the working vehicle 1 reaches the goal point is at or around a target value.

With the configuration of Item 4 described above, the travel route L2 of the working vehicle 1 can be appropriately determined while balancing stable travel of the working vehicle 1 in which the vehicle body 3, the traveling device 5, and the working device 2 do not hit the at least one obstacle Q1 and efficient travel of the working vehicle 1 in which the vehicle body 3, the traveling device 5, and the working device 2 do not move away from the at least one obstacle Q1 more than necessary.

(Item 5) The automatic travel assistance system 100 according to any one of items 1 to 4, the vehicle information includes pieces of information indicating sizes of the vehicle body 3, the traveling device 5 and the working device 2, positions of the traveling device 5 and the working device 2 relative to the vehicle body 3, and heights of the vehicle body 3, the traveling device 5 and the working device 2 from a bottom of the traveling device 5, the area information includes pieces of information indicating the location where the at least one obstacle Q1 is present and a height of the at least one obstacle Q1 from a ground surface, and the costmap MP1, MP2 created by the information processor includes a first costmap MP1 showing a distribution of costs each of which is a degree of difficulty for the traveling device 5 to pass through the corresponding location, and a second costmap MP2 showing a distribution of costs each of which is a degree of difficulty for the vehicle body 3 and the working device 2 to pass through the corresponding location.

With the configuration of Item 5 described above, the first costmap MP1 showing the distribution of the costs each of which is the degree of difficulty for passage of the traveling device 5 in contact with the ground surface with respect to the at least one obstacle Q1, and the second costmap MP2 showing the distribution of the costs each of which is the degree of difficulty for passage of the vehicle body 3 and the working device 2 not in contact with the ground surface and the working device 2 protruding from the vehicle body 3 in the vehicle-width direction with respect to the at least one obstacle Q1, are created in both the planar direction and the vertical direction. Thus, it is possible to cause the working vehicle 1 to perform the automatic travel stably while further reliably avoiding the vehicle body 3, the traveling device 5, and the working device 2 from hitting the at least one obstacle Q1 in the surrounding area, based on the first costmap MP1 and the second costmap MP2. Additionally, for example, when there is at least one obstacle Q1 whose height from the ground surface is lower than that of the working device 2 protruding from the vehicle body 3 in the vehicle-width direction, it is possible to cause the working vehicle 1 to travel such that the working device 2 passes above the at least one obstacle Q1 while avoiding the traveling device 5 and the vehicle body 3 from hitting the at least one obstacle Q1, and it is possible to increase the flexibility of the location through which the working vehicle 1 can travel.

(Item 6) In the automatic travel assistance system 100 according to any one of items 2 to 5, the information processor 11 is configured or programmed to, before the start of and/or during the automatic travel of the working vehicle 1, determine at least one specific obstacle Q1 capable of being hit by at least one of the vehicle body 3, the traveling device 5, or the working device 2, the at least one specific obstacle Q1 being at least one of a plurality of the obstacles Q1 indicated by the area information, assign the cost of the first predetermined value to a location where the at least one specific obstacle Q1 is present, and assign the costs to locations around the at least one specific obstacle Q1 such that the costs decrease with increasing distance from the at least one specific obstacle Q1.

With the configuration of Item 6 described above, since the costmap MP1, MP2 is created with reference to the at least one obstacle Q1 only for the at least one obstacle Q1 with which there is a possibility of hitting before the start of and/or during the automatic travel of the working vehicle 1. Thus, the reliability of the costmap MP1, MP2 is improved, it is possible to cause the working vehicle 1 to perform the automatic travel further stably and efficiently, and it is possible to reduce the processing load of the information processor 11.

(Item 7) In the automatic travel assistance system 100 according to any one of items 1 to 6, the area information includes information indicating a location of an off-limits zone X1 of the area E1 where the working vehicle 1 is prohibited from entering, and the information processor 11 is configured or programmed to assign the cost of the first predetermined value to the off-limits zone X1, and assign the costs to locations around the off-limits zone X1 such that the costs decrease with increasing distance from the off-limits zone X1.

With the configuration of Item 7 described above, it is possible to cause the working vehicle 1 to perform the automatic travel stably toward the goal point while avoiding the traveling device 5, the vehicle body 3, and the working device 2 from entering the off-limits zone X1.

(Item 8) In the automatic travel assistance system 100 according to any one of items 1 to 7, the information processor 11 is configured or programmed to, when there are no locations at each of which the corresponding assigned cost is equal to or less than the second predetermined value and each of which is passable by the vehicle body 3, the traveling device 5 and the working device 2, correct one or more costs each having a value less than the first predetermined value assigned to one or more locations around the at least one obstacle Q1 such that the one or more costs decrease.

With the configuration of Item 8 described above, at least one of the vehicle body 3, the traveling device 5, or the working device 2 can be brought close to the at least one obstacle Q1 without hitting the at least one obstacle Q1. Thus, it is possible to cause the working vehicle 1 to perform the automatic travel stably, and it is possible to increase the flexibility of the location at which the working vehicle 1 can travel.

(Item 9) In the automatic travel assistance system 100 according to item 8, the information processor 11 is configured or programmed to cause a user interface 13a, 32 to output error information and cause the vehicle controller 12 to stop the automatic travel (i) when the one or more costs are not correctable and/or (ii) when, even after the one or more costs are corrected, there are no locations at each of which the corresponding assigned cost is equal to or less than the second predetermined value and each of which is passable by the vehicle body 3, the traveling device 5 and the working device 2.

With the configuration of Item 9 described above, it is possible to reliably avoid at least one of the vehicle body 3, the traveling device 5, or the working device 2 from hitting the at least one obstacle Q1, and it is possible to notify the user that the automatic travel of the working vehicle 1 has stopped.

(Item 10) In the automatic travel assistance system 100 according to any one of items 1 to 9, the information processor 11 is configured or programmed to determine whether the at least one obstacle Q1 is at least one moving obstacle Q1y which is movable or at least one stationary obstacle Q1z which is not movable based on the area information, and assign costs such that the costs are higher in a predetermined range from the at least one moving obstacle Q1y than in a predetermined range from the at least one stationary obstacle Q1z.

With the configuration of Item 10 described above, it is possible to secure longer distances (intervals) of the vehicle body 3, the traveling device 5, and the working device 2 from the at least one moving obstacle Q1y than distances of the vehicle body 3, the traveling device 5, and the working device 2 from the at least one stationary obstacle Q1z. Thus, even if the at least one moving obstacle Q1y suddenly starts to move when the working vehicle 1 travels on, for example, the lateral side of the at least one moving obstacle Q1y, it is possible to avoid the at least one moving obstacle Q1y from being hit by any one of the vehicle body 3, the traveling device 5, and the working device 2.

(Item 11) In the automatic travel assistance system 100 according to item 10, the input interface 13a to 13d, 32 includes a sensing assembly 13d to sense a surrounding area of the working vehicle 1, and the information processor 11 is configured or programmed to predict a direction of movement F1 of the at least one moving obstacle Q1y based on a sensing result from the sensing assembly 13d, and assign costs such that the costs are higher in a portion R1 of the predetermined range from the at least one moving obstacle Q1y that is located in the direction of movement F1 from the at least one moving obstacle Q1y than in a portion R2 of the predetermined range from the at least one moving obstacle Q1y that is not located in the direction of movement F1 from the at least one moving obstacle Q1y.

With the configuration of Item 11 described above, even if the at least one moving obstacle Q1y suddenly starts to move when the working vehicle 1 travels on, for example, the lateral side of the at least one moving obstacle Q1y, it is possible to further avoid the at least one moving obstacle Q1y from being hit by any one of the vehicle body 3, the traveling device 5, and the working device 2.

(Item 12) In the automatic travel assistance system 100 according to any one of items 1 to 10, the input interface 13a to 13d, 32 includes a sensing assembly 13d to sense a surrounding area of the working vehicle 1, and the information processor 11 is configured or programmed to, during the automatic travel of the working vehicle 1, based on a sensing data outputted from the sensing assembly 13d, assign the cost to an object present in the surrounding area of the working vehicle 1 according to a type of the object and a distance from the object to the at least one obstacle Q1.

With the configuration of Item 12 described above, it is possible to cause the working vehicle 1 to perform the automatic travel stably and efficiently in consideration of the object and the at least one obstacle Q1 present in the surrounding area of the working vehicle 1.

(Item 13) In the automatic travel assistance system 100 according to item 12, the information processor 11 is configured or programmed to, when a ground surface is detected as the object, determine at least one of (i) whether the ground surface is paved, (ii) a degree of slope of the ground surface, or (iii) a direction of slope of the ground surface, and assign the cost to the ground surface according to a result of the determination and a distance from the ground surface to the at least one obstacle Q1 indicated by the area information.

With the configuration of Item 13 described above, it is possible to assign a cost to the ground surface on which the working vehicle 1 travels in consideration of the ease of travel of the working vehicle 1 and the at least one obstacle Q1 in the surrounding area, and it is possible to cause the working vehicle 1 to perform the automatic travel stably and efficiently based on the cost assigned to the ground surface.

(Item 14) In the automatic travel assistance system 100 according to item 13, the information processor 11 is configured or programmed to determine whether the traveling device 5 includes a crawler track based on the vehicle information and determine whether the ground surface is paved based on the area information, and change the cost assigned to the ground surface according to a result of the determination.

With the configuration of Item 14 described above, for example, when the traveling device 5 includes the crawler track, the cost of the unpaved ground surface is changed such that the cost decreases by the predetermined value, and the working vehicle 1 can be guided such that the traveling device 5 passes on the ground surface. In contrast, when the traveling device 5 does not include the crawler track and includes only the wheels 5F and 5R, the cost of the unpaved ground surface is changed to increase by the predetermined value, and the working vehicle 1 can be guided such that the traveling device 5 passes on another paved ground surface. Additionally, as a result, the travel performance of the working vehicle 1 in the automatic travel can be improved.

(Item 15) In the automatic travel assistance system 100 according to any one of items 1 to 14, the working vehicle 1 includes a linkage 9 to connect the working device 2 thereto, and the information processor 11 is configured or programmed to determine, based on the vehicle information, whether the working device 2 is a mounted working device to be mounted on the vehicle body 3 via the linkage 9 or a towed working device to be towed by the vehicle body 3, and change one or more costs assigned to one or more locations around the at least one obstacle Q1 according to a result of the determination.

With the configuration of Item 15 described above, the costs can be assigned to the locations around the at least one obstacle Q1 according to whether the working device 2 connected to the working vehicle 1 is the mounted working device or the towed working device. Then, when the working vehicle 1 travels on, for example, the lateral side of the at least one obstacle Q1, it is possible to more reliably avoid the working device 2 from hitting the at least one obstacle Q1.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An automatic travel assistance system (100) comprising:
an input interface (13a, 32, 13b, 13c, 13d) to receive input of vehicle information relating to a working vehicle (1), goal information relating to a goal point in a predetermined area (E1), and area information relating to at least one obstacle (Q1) in the area (E1), the working vehicle (1) including a traveling device (5) to cause a vehicle body (3) to travel and being configured to attach thereto a working device (2) to perform work;
an information processor (11) configured or programmed to create a costmap (MP1, MP2) of the area (E1) showing a cost distribution by assigning a cost of a first predetermined value to a location where the at least one obstacle (Q1) is present and assigning costs each of which is less than the first predetermined value to locations where no obstacles (Q1) are present such that the costs decrease with increasing distance from the at least one obstacle (Q1), each of the cost and the costs being a degree of difficulty for the vehicle body (3), the traveling device (5), and the working device (2) attached to the working vehicle (1) to pass through the corresponding location; and
a vehicle controller (12) configured or programmed to control travel of the working vehicle (1) such that the vehicle body (3), the traveling device (5), and the working device (2) pass through locations at each of which the corresponding assigned cost is equal to or less than a second predetermined value less than the first predetermined value, to cause the working vehicle (1) to perform automatic travel toward the goal point.

2. The automatic travel assistance system (100) according to claim 1, wherein
the information processor (11) is configured or programmed to, before a start of and/or during the automatic travel of the working vehicle (1), create the costmap (MP1, MP2) based on the area information inputted via the input interface (13a to 13d, 32) and output control information based on the costmap (MP1, MP2); and
the vehicle controller (12) is configured or programmed to control the travel of the working vehicle (1) to perform the automatic travel based on the control information.

3. The automatic travel assistance system (100) according to claim 2, wherein
the information processor (11) is configured or programmed to, based on the costmap (MP1, MP2), the vehicle information, and the goal information, determine a travel route (L2) for the working vehicle (1) to travel toward the goal point such that the vehicle body (3), the traveling device (5), and the working device (2) pass through the locations at each of which the corresponding assigned cost is equal to or less than the second predetermined value, and output the control information indicating the travel route (L2); and
the vehicle controller (12) is configured or programmed to control the travel of the working vehicle (1) and perform the automatic travel based on the travel route (L2).

4. The automatic travel assistance system (100) according to claim 3, wherein the information processor (11) is configured or programmed to determine the travel route (L2) such that the sum of costs assigned to locations to be passed through by at least one of the vehicle body (3), the traveling device (5) or the working device (2) before the working vehicle (1) reaches the goal point is at or around a target value.

5. The automatic travel assistance system (100) according to any one of claims 1 to 4, wherein
the vehicle information includes pieces of information indicating sizes of the vehicle body (3), the traveling device (5) and the working device (2), positions of the traveling device (5) and the working device (2) relative to the vehicle body (3), and heights of the vehicle body (3), the traveling device (5) and the working device (2) from a bottom of the traveling device (5);
the area information includes pieces of information indicating the location where the at least one obstacle (Q1) is present and a height of the at least one obstacle (Q1) from a ground surface; and
the costmap (MP1, MP2) created by the information processor includes a first costmap (MP1) showing a distribution of costs each of which is a degree of difficulty for the traveling device (5) to pass through the corresponding location, and a second costmap (MP2) showing a distribution of costs each of which is a degree of difficulty for the vehicle body (3) and the working device (2) to pass through the corresponding location.

6. The automatic travel assistance system (100) according to any one of claims 1 to 5 taken in combination with claim 2, wherein the information processor (11) is configured or programmed to, before the start of and/or during the automatic travel of the working vehicle (1), determine at least one specific obstacle (Q1) capable of being hit by at least one of the vehicle body (3), the traveling device (5), or the working device (2), the at least one specific obstacle (Q1) being at least one of a plurality of the obstacles (Q1) indicated by the area information, assign the cost of the first predetermined value to a location where the at least one specific obstacle (Q1) is present, and assign the costs to locations around the at least one specific obstacle (Q1) such that the costs decrease with increasing distance from the at least one specific obstacle (Q1).

7. The automatic travel assistance system (100) according to any one of claims 1 to 6, wherein
the area information includes information indicating a location of an off-limits zone (X1) of the area (E1) where the working vehicle (1) is prohibited from entering; and
the information processor (11) is configured or programmed to assign the cost of the first predetermined value to the off-limits zone (X1), and assign the costs to locations around the off-limits zone (X1) such that the costs decrease with increasing distance from the off-limits zone (X1).

8. The automatic travel assistance system (100) according to any one of claims 1 to 7, wherein the information processor (11) is configured or programmed to, when there are no locations at each of which the corresponding assigned cost is equal to or less than the second predetermined value and each of which is passable by the vehicle body (3), the traveling device (5) and the working device (2), correct one or more costs each having a value less than the first predetermined value assigned to one or more locations around the at least one obstacle (Q1) such that the one or more costs decrease.

9. The automatic travel assistance system (100) according to claim 8, wherein the information processor (11) is configured or programmed to cause a user interface (13a, 32) to output error information and cause the vehicle controller (12) to stop the automatic travel (i) when the one or more costs are not correctable and/or (ii) when, even after the one or more costs are corrected, there are no locations at each of which the corresponding assigned cost is equal to or less than the second predetermined value and each of which is passable by the vehicle body (3), the traveling device (5) and the working device (2).

10. The automatic travel assistance system (100) according to any one of claims 1 to 9, wherein the information processor (11) is configured or programmed to determine whether the at least one obstacle (Q1) is at least one moving obstacle (Q1y) which is movable or at least one stationary obstacle (Q1z) which is not movable based on the area information, and assign costs such that the costs are higher in a predetermined range from the at least one moving obstacle (Q1y) than in a predetermined range from the at least one stationary obstacle (Q1z).

11. The automatic travel assistance system (100) according to claim 10, wherein
the input interface (13a to 13d, 32) includes a sensing assembly (13d) to sense a surrounding area of the working vehicle (1); and
the information processor (11) is configured or programmed to predict a direction of movement (F1) of the at least one moving obstacle (Q1y) based on a sensing result from the sensing assembly (13d), and assign costs such that the costs are higher in a portion (R1) of the predetermined range from the at least one moving obstacle (Q1y) that is located in the direction of movement (F1) from the at least one moving obstacle (Q1y) than in a portion (R2) of the predetermined range from the at least one moving obstacle (Q1y) that is not located in the direction of movement (F1) from the at least one moving obstacle (Q1y).

12. The automatic travel assistance system (100) according to any one of claims 1 to 10, wherein
the input interface (13a to 13d, 32) includes a sensing assembly (13d) to sense a surrounding area of the working vehicle (1); and
the information processor (11) is configured or programmed to, during the automatic travel of the working vehicle (1), based on a sensing data outputted from the sensing assembly (13d), assign the cost to an object present in the surrounding area of the working vehicle (1) according to a type of the object and a distance from the object to the at least one obstacle (Q1).

13. The automatic travel assistance system (100) according to claim 12, wherein the information processor (11) is configured or programmed to, when a ground surface is detected as the object, determine at least one of (i) whether the ground surface is paved, (ii) a degree of slope of the ground surface, or (iii) a direction of slope of the ground surface, and assign the cost to the ground surface according to a result of the determination and a distance from the ground surface to the at least one obstacle (Q1) indicated by the area information.

14. The automatic travel assistance system (100) according to claim 13, wherein the information processor (11) is configured or programmed to determine whether the traveling device (5) includes a crawler track based on the vehicle information and determine whether the ground surface is paved based on the area information, and change the cost assigned to the ground surface according to a result of the determination.

15. The automatic travel assistance system (100) according to any one of claims 1 to 14, wherein
the working vehicle (1) includes a linkage (9) to connect the working device (2) thereto; and
the information processor (11) is configured or programmed to determine, based on the vehicle information, whether the working device (2) is a mounted working device to be mounted on the vehicle body (3) via the linkage (9) or a towed working device to be towed by the vehicle body (3), and change one or more costs assigned to one or more locations around the at least one obstacle (Q1) according to a result of the determination.
